(19) Europäisches Patentamt
European Patent Office
Office européen des brevets

(11) **EP 3 567 807 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(51) Int Cl.:
*H04L 12/24* *(2006.01)*    *H04L 12/26* *(2006.01)*

(21) Anmeldenummer: **18171479.1**

(22) Anmeldetag: **09.05.2018**

(54) **VORRICHTUNG UND VERFAHREN ZUR VERTEILUNG UND VERARBEITUNG DER SERVICE AREA EINES KOMMUNIKATIONSSYSTEMS ZUR VERBESSERTEN SCHÄTZUNG DER ZUVERLÄSSIGKEIT UND LATENZ EINER DATENÜBERTRAGUNG**

DEVICE AND METHOD FOR DISTRIBUTING AND PROCESSING THE SERVICE AREA OF A COMMUNICATION SYSTEM FOR THE IMPROVED ESTIMATION OF THE RELIABILITY AND LATENCY OF A DATA TRANSMISSION

DISPOSITIF ET PROCÉDÉ DE DISTRIBUTION ET DE TRAITEMENT DE LA ZONE DE SERVICE D'UN SYSTÈME DE COMMUNICATION DESTINÉS À UNE MEILLEURE ESTIMATION DE LA FIABILITÉ ET DE LA LATENCE DE TRANSMISSION DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.11.2019 Patentblatt 2019/46**

(73) Patentinhaber: **FRAUNHOFER-GESELLSCHAFT zur Förderung**
**der angewandten Forschung e.V.**
**80686 München (DE)**

(72) Erfinder:
• **ROSCHER, Karsten**
  **80803 München (DE)**
• **JIRU, Josef**
  **81371 München (DE)**

(74) Vertreter: **Schairer, Oliver et al**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
**US-A1- 2003 005 145    US-A1- 2010 135 232**
**US-A1- 2011 182 248**

• **European Standard: "Intelligent Transport Systems (ITS); Vehicular Communications; GeoNetworking; Part 4: Geographical addressing and forwarding for point-to-point and point-to-multipoint communications; Sub-part 1: Media-Independent Functionality", , 1. August 2017 (2017-08-01), Seiten 2017-8, XP055515164, Gefunden im Internet: URL:https://www.etsi.org/deliver/etsi_en/3 02600_302699/3026360401/01.03.01_60/en_302 6360401v010301p.pdf [gefunden am 2018-10-15]**

**Beschreibung**

Die Anmeldung betrifft die Schätzung der Zuverlässigkeit und Latenz einer Datenübertragung und, im Besonderen eine Vorrichtung und ein Verfahren zur Verteilung und Verarbeitung der Service Area (Dienstbereich) eines Kommunikationssystems zur verbesserten Schätzung der Zuverlässigkeit und Latenz einer Datenübertragung.

In naher Zukunft werden vernetzte kooperative Systeme wie Fahrzeuge oder Industrieroboter direkt miteinander kommunizieren, um sich gegenseitig vor Hindernissen zu warnen oder gemeinsame Strategien abzustimmen. Hierzu ist eine zuverlässige Kommunikation zwischen den Teilnehmern erforderlich, die insbesondere bei beweglichen Objekten mit geringer Verzögerung (Latenz) erfolgen muss, um rechtzeitig reagieren zu können. Applikationen können dabei mit angepassten Strategien auf den Ausfall oder die Verschlechterung der Kommunikationsqualität reagieren, was aber in der Regel zu einer schlechteren Leistung führt (graceful degradation). Eine verlässliche Prädiktion der zu erwartenden Kommunikationsqualität ist daher ein wichtiger Bestandteil solcher Systeme, um einerseits zu jeder Zeit die erforderliche Sicherheit zu gewährleisten und andererseits ein nahezu optimales Ergebnis zu erreichen.

Aktuelle Mobilfunknetze sind auf eine Kommunikation zwischen einem Client (mobil) und einem Server (Backend, Internet) optimiert. Daher kann der Client seine eigene Verbindungsqualität anhand von Messdaten gut abschätzen. Für eine Kommunikation zwischen mobilen Clients muss jedoch auch die Verbindungsqualität des Empfängers berücksichtigt werden. Hierzu gibt es jedoch bisher nur Ansätze, die einen kontinuierlichen Datenaustausch zwischen Sender und Empfänger erfordern, was für große Netze und ggf. spontane Kommunikation nicht skaliert.

Ebenso wichtig ist eine entsprechende Prädiktion, falls mehrere Kommunikationstechnologien verfügbar sind (sogenannte hybride oder heterogene Netze), bei denen zur Laufzeit die optimale Technologie ausgewählt werden soll. Hierfür sind belastbare Informationen zur erreichbaren Qualität über die unterschiedlichen Kommunikationspfade eine Grundvoraussetzung.

Durch die hohe Beweglichkeit vernetzter Verkehrsteilnehmer verändern sich deren Kommunikationsbeziehungen kontinuierlich. Kommunikationspartner und deren Verbindungsqualität sind ständigen Schwankungen unterworfen. Die Herausforderung besteht dabei in der Abschätzung von Zuverlässigkeit und Latenz einer direkten Kommunikation zwischen zwei Clients (User Equipment - UEs) in einem Mobilfunknetz, bei dem die Basisstation oder sogar das Core Netz zur Verteilung der Nachrichten genutzt wird. Ist die Senderseite durch entsprechenden Informationsaustausch mit dem Netz für den Absender noch gut zu beurteilen, so liegen über die Verbindung zum Empfänger in der Regel keine Informationen vor.

Um applikationsseitig auf die veränderliche Verfügbarkeit von Kommunikationskanälen zu reagieren oder zur Laufzeit auf alternative Technologien auszuweichen, ist eine möglichst zuverlässige Schätzung der Wahrscheinlichkeit, mit der ein zu sendendes Paket innerhalb einer definierten Zeitspanne erfolgreich beim Empfänger ankommt jedoch unabdingbar.

Sind solche Mechanismen nicht gegeben, schwindet die Akzeptanz von drahtlosen Systemen für sicherheitsrelevante Anwendungsfälle und Optimierungspotential durch kooperative Strategien bleibt ungenutzt.

Bisherige Verfahren zur Beurteilung der Dienstqualität setzen auf ein kontinuierliches Monitoring einer bestehenden Verbindung zwischen Sender und Empfänger. Hier werden fortlaufend Messinformationen ausgetauscht, um Abweichungen in der Verbindungsqualität zu erkennen und entsprechend zu reagieren. Dieser Ansatz funktioniert aber nur, solange die Zahl der Kommunikationspartner gering bleibt und Verbindungen über einen längeren Zeitraum bestehen. Beides ist bei vernetzten Fahrzeugen jedoch nicht gegeben. Hier muss beispielsweise der Hinweis über ein plötzliches Bremsmanöver verzögerungsfrei an die nachfolgenden Fahrzeuge verteilt werden. Eine Schätzung muss demnach aus den vorhandenen Kontextinformationen erfolgen, ohne den Overhead durch einen zusätzlichen Informationsaustausch drastisch zu erhöhen.

Für Adressierung und Routing wird bei der Car-2-X Kommunikation in Europa ein positionsbasiertes Verfahren - ETSI ITS GeoNetworking (siehe [1]) - eingesetzt. Ein wichtiger Aspekt ist hierbei, dass die Position des Empfängers (unicast) oder das Zielgebiet (geo-broadcast/geoanycast) grob bekannt sind. Zusätzliche Kontextinformationen über das jeweilige Gebiet können demnach genutzt werden, um die Vorhersage der Dienstqualität zu verbessern, ohne dass man konkrete Informationen zu jedem Client benötigt. Zumindest unter der Voraussetzung, dass gewisse Parameter in einem lokalen Umfeld stabil sind.

Mobile oder Multiaccess Edge Computing (MEC) ist eine vielversprechende Technologie für 4G/5G Netze, bei denen Informationsverarbeitung und -terminierung näher zu den Endgeräten rückt. Damit können in einem lokalen Kontext Daten mit geringer Latenz verarbeitet und weitergeleitet werden. Eine MEC Instanz bedient in der Regel ein bestimmtes Gebiet (Service Area), welches durch die Verteilung der zugehörigen Basisstationen definiert ist. Wobei sich die Service Area je nach Nutzerverhalten und aufgrund anderer Randbedingungen innerhalb gewisser Grenzen dynamisch ändern kann. Mit einem passenden Verteildienst - zum Beispiel einem GeoService, können Clients innerhalb einer Service Area mit niedriger Latenz direkt kommunizieren.

Außerhalb sind Verzögerung und deren Streuung jedoch um Größenordnungen höher. Positionsbasierte Ansätze für mobile Netze sind dabei nicht auf den Fahrzeugkontext beschränkt, sondern sind vor allem für hochdynamische Netze in anderen Bereichen (Luftfahrt, UAVs, Industrieanlagen, ...) eine geeignete Alternative.

Mit zunehmender Verbreitung drahtloser Funktechnologien zeichnet sich ein weiterer Trend ab: hybride bzw. heterogene Netze. Dabei werden mehrere Technologien eingesetzt, um deren Stärken zu kombinieren und Schwächen zu kompensieren. Ein Beispiel hierfür ist die Kombination einer lokalen Funktechnologie mit niedriger Latenz und niedriger Reichweite mit einem zellenbasierten Mobilfunksystem, bei dem Reichweite aber auch Latenz üblicherweise deutlich höher sind.

Bisherige Systeme weisen dabei die Technologien entweder statisch zu konkreten Anwendungen zu oder nutzen einfach alle verfügbaren Kanäle, um durch Redundanz die Zuverlässigkeit zu erhöhen. Da Funkspektrum aber eine wertvolle Ressource ist. besteht hier ein großes Optimierungspotential indem zur Laufzeit die am besten geeignete Technologie ausgewählt wird. Wichtige Voraussetzung ist aber für die jeweiligen Technologien eine belastbare Abschätzung über die zu erwartende Kommunikationsgüte in Abhängigkeit von Kontext, Anwendungsanforderungen und Nutzung durch andere Teilnehmer.

US 2003/005145 A1 zeigt ein Verfahren zum Überwachen einer Kommunikationssitzung zwischen einer Quelle, die mit einem ersten Knoten eines Netzwerks verbunden ist, und einem Ziel, das mit einem zweiten Knoten des Netzwerks verbunden ist. Mindestens eine Quelle und ein Ziel befinden sich außerhalb des Netzwerks. Dabei wird der ausgewählte Verkehr außerhalb des Servicenetzwerks sowie in oder an einer Schnittstelle des Servicenetzwerks zu ausgewählten Zuständen und Zeitpunkten während der Kommunikationssitzung zwischen der Quelle und dem Ziel erfasst.

US 2010/135232 A1 zeigt eine kooperative Planung in Vorwärts- und Rückwärtsrichtung, um eine Umlaufverzögerung interaktiver Prozesse zu verringern Dabei wird eine Verzögerung von Paketen verschiedener Benutzer während der netzwerkbasierten Planung von Paketen geschätzt.

US 2011/182248 A1 zeigt ein Bestimmen von Planungsprioritäten von Benutzern basierend auf Informationen, die für eine Ende-zu-Ende-Qualität der Nutzerkommunikation in einem Gesamtnetzwerk repräsentativ sind.

"Intelligent Transport Systems (ITS); Vehicular Communications; GeoNetworking; Part 4: Geographical addressing and forwarding for point-to-point and point-to-multipoint communications; Sub-part 1: Media-Independent Functionality", 1. August 2017, zeigt ein GeoNetworking Protokoll, wobei es sich dabei um ein Netzwerkschichtprotokoll handelt, eine Paketsteuerung in Ad Hoc Netzwerken realisiert. Geografische Positionen werden dabei genutzt.

Eine erste Nutzereinheit nach Anspruch 1, ein System nach Anspruch 10, ein Verfahren nach Anspruch 14 und ein Computerprogramm nach Anspruch 15 werden bereitgestellt.

Eine erste Nutzereinheit wird bereitgestellt. Die erste Nutzereinheit umfasst eine Speichereinheit, die eingerichtet ist, zumindest eine erste Zuverlässigkeits-Information über eine erste Zuverlässigkeit einer ersten Kommunikationsverbindung für eine Service Area zu speichern, in der sich die erste Nutzereinheit befindet, oder zumindest eine erste Latenz-Information über eine erste Latenz der ersten Kommunikationsverbindung für die Service Area zu speichern, in der sich die erste Nutzereinheit befindet. Des Weiteren umfasst die erste Nutzereinheit ein Empfangsmodul, das eingerichtet ist, eine Nachricht von einer zweiten Nutzereinheit zu empfangen, wobei die Nachricht zumindest eine zweite Zuverlässigkeits-Information über eine zweite Zuverlässigkeit einer zweiten Kommunikationsverbindung für eine Service Area umfasst, in der sich die zweite Nutzereinheit befindet, oder wobei die Nachricht zumindest eine zweite Latenz-Information über eine zweite Latenz der zweiten Kommunikationsverbindung für die Service Area umfasst, in der sich die zweite Nutzereinheit befindet. Ferner umfasst die erste Nutzereinheit eine Prozessoreinheit, die ausgebildet ist, eine Gesamtzuverlässigkeit einer Gesamt-Kommunikationsverbindung zwischen der ersten Nutzereinheit und der zweiten Nutzereinheit in Abhängigkeit von der ersten Zuverlässigkeits-Information und in Abhängigkeit von der zweiten Zuverlässigkeits-Information zu bestimmen, oder eine Gesamtlatenz der Gesamt-Kommunikationsverbindung zwischen der ersten Nutzereinheit und der zweiten Nutzereinheit in Abhängigkeit von der ersten Latenz-Information und in Abhängigkeit von der zweiten Latenz-Information zu bestimmen. Dabei ist die Service Area, in der sich die zweite Nutzereinheit befindet, identisch mit der Service Area ist, in der sich die erste Nutzereinheit befindet, oder aber, die Service Area, in der sich die zweite Nutzereinheit befindet, ist unterschiedlich zu der Service Area, in der sich die erste Nutzereinheit befindet.

Des Weiteren wird ein System bereitgestellt. Das System umfasst die oben beschriebene erste Nutzereinheit und die oben beschriebene zweite Nutzereinheit. Die zweite Nutzereinheit weist eine Speichereinheit auf, die eingerichtet ist, zumindest die zweite Zuverlässigkeits-Information über die zweite Zuverlässigkeit der zweiten Kommunikationsverbindung für die Service Area zu speichern, in der sich die zweite Nutzereinheit befindet, oder zumindest die zweite Latenz-Information über die zweite Latenz der zweiten Kommunikationsverbindung für die Service Area zu speichern, in der sich die zweite Nutzereinheit befindet. Des Weiteren weist die zweite Nutzereinheit ein Sendemodul auf, das eingerichtet ist, die Nachricht zu der ersten Nutzereinheit zu senden, wobei die Nachricht zumindest die zweite Zuverlässigkeits-Information oder zumindest die zweite Latenz-Information umfasst.

Ferner wird ein Verfahren bereitgestellt. Das Verfahren umfasst:

- Gespeichertes Vorhalten in einer ersten Nutzereinheit von zumindest einer ersten Zuverlässigkeits-Information über eine erste Zuverlässigkeit einer ersten Kommunikationsverbindung für eine Service Area, in der sich die erste Nutzereinheit befindet, oder gespeichertes Vorhalten zumindest einer ersten Latenz-Information über eine erste Latenz der ersten Kommunikationsverbindung für die Service Area, in der sich die erste Nutzereinheit befindet.

- Empfangen einer Nachricht von einer zweiten Nutzereinheit durch die erste Nutzereinheit, wobei die Nachricht zumindest eine zweite Zuverlässigkeits-Information über eine zweite Zuverlässigkeit einer zweiten Kommunikationsverbindung für eine Service Area umfasst, in der sich die zweite Nutzereinheit befindet, oder wobei die Nachricht zumindest eine zweite Latenz-Information über eine zweite Latenz der zweiten Kommunikationsverbindung für die Service Area umfasst, in der sich die zweite Nutzereinheit befindet. Und:

- Bestimmen einer Gesamtzuverlässigkeit einer Gesamt-Kommunikationsverbindung zwischen der ersten Nutzereinheit und der zweiten Nutzereinheit in Abhängigkeit von der ersten Zuverlässigkeits-Information und in Abhängigkeit von der zweiten Zuverlässigkeits-Information durch die erste Nutzereinheit, oder Bestimmen einer Gesamtlatenz der Gesamt-Kommunikationsverbindung zwischen der ersten Nutzereinheit und der zweiten Nutzereinheit in Abhängigkeit von der ersten Latenz-Information und in Abhängigkeit von der zweiten Latenz-Information zu bestimmen durch die erste Nutzereinheit.

Dabei ist die Service Area, in der sich die zweite Nutzereinheit befindet, identisch mit der Service Area, in der sich die erste Nutzereinheit befindet, oder die Service Area, in der sich die zweite Nutzereinheit befindet, ist unterschiedlich zu der Service Area, in der sich die erste Nutzereinheit befindet.

Ferner wird ein Computerprogramm mit einem Programmcode zur Durchführung des oben beschriebenen Verfahrens bereitgestellt.

Manche Ausführungsformen basieren auf Mobile oder Multiaccess Edge Computing (MEC), das durch eine lokale Informationsverarbeitung in der Nähe der Basisstation das Potential für eine direkte Kommunikation zwischen räumlich benachbarten Clients mit niedriger Latenz bietet. Eine solche Plattform kann den Clients zusätzliche Informationen bereitstellen, um die Prädiktion der zu erwartenden Dienstgüte zu verbessern.

Nachfolgend werden bevorzugte Ausführungsformen der Erfindung unter Bezugnahme auf die Zeichnungen beschrieben.

In den Zeichnungen ist dargestellt:

Fig. 1    zeigt eine erste Nutzereinheit gemäß einer Ausführungsform.

Fig. 2    zeigt ein System gemäß einer Ausführungsform.

Fig. 3    zeigt ein Kommunikationsszenario gemäß einer Ausführungsform, bei dem sich Sender und Empfänger in der gleichen Service Area befinden.

Fig. 4    zeigt ein Kommunikationsszenario gemäß einer Ausführungsform, bei dem sich Sender und Empfänger in unterschiedlichen Service Areas befinden.

Fig. 5a    zeigt ein Szenario gemäß einer Ausführungsform, bei dem sich der Empfänger in der Service Area des MEC befindet, und bei dem sich der Sender in keiner Service Area befindet.

Fig. 5b    zeigt ein Szenario gemäß einer Ausführungsform, bei dem sich der Empfänger in der Service Area von GN Router befindet, und Sender in keiner Service Area befindet.

Fig. 6    zeigt ein Flussdiagramm für ein solches Kommunikationsszenario gemäß einer Ausführungsform.

Fig. 7    zeigt eine homogene Service Areagemäß einer Ausführungsform.

Fig. 8    zeigt eine räumlich aufgelöste Service Area gemäß einer Ausführungsform.

Nachfolgend werden bevorzugte Ausführungsformen der Erfindung anhand der Zeichnungen beschrieben:

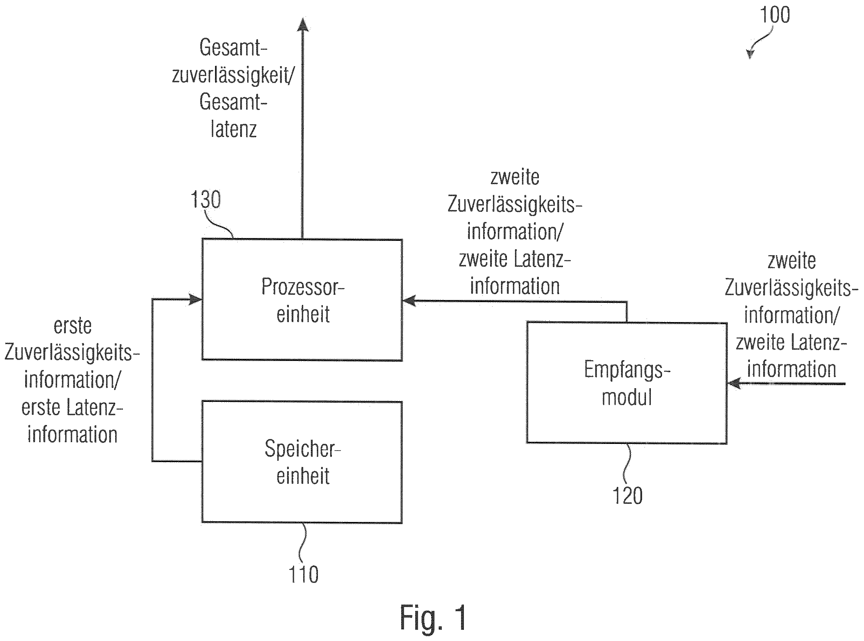

Fig. 1 zeigt eine Vorrichtung gemäß einer Ausführungsform.

Eine erste Nutzereinheit 100 wird bereitgestellt.

Die erste Nutzereinheit 100 umfasst eine Speichereinheit 110, die eingerichtet ist, zumindest eine erste Zuverlässigkeits-Information über eine erste Zuverlässigkeit einer ersten Kommunikationsverbindung für eine Service Area zu speichern, in der sich die erste Nutzereinheit 100 befindet, oder zumindest eine erste Latenz-Information über eine erste Latenz der ersten Kommunikationsverbindung für die Service Area zu speichern, in der sich die erste Nutzereinheit 100 befindet.

Des Weiteren umfasst die erste Nutzereinheit 100 ein Empfangsmodul 120, das eingerichtet ist, eine Nachricht von einer Kommunikationseinheit zu empfangen, wobei die Nachricht zumindest eine zweite Zuverlässigkeits-Information über eine zweite Zuverlässigkeit einer zweiten Kommunikationsverbindung für eine Service Area umfasst, in der sich die zweite Nutzereinheit befindet, oder wobei die Nachricht zumindest eine zweite Latenz-Information über eine zweite Latenz der zweiten Kommunikationsverbindung für die Service Area umfasst, in der sich die zweite Nutzereinheit befindet.

Ferner umfasst die erste Nutzereinheit 100 eine Prozessoreinheit 130, die ausgebildet ist, eine Gesamtzuverlässigkeit einer Gesamt-Kommunikationsverbindung zwischen der ersten Nutzereinheit 100 und der zweiten Nutzereinheit in Abhängigkeit von der ersten Zuverlässigkeits-Information und in Abhängigkeit von der zweiten Zuverlässigkeits-Information zu bestimmen, oder eine Gesamtlatenz der Gesamt-Kommunikationsverbindung zwischen der ersten Nutzereinheit 100 und der zweiten Nutzereinheit in Abhängigkeit von der ersten Latenz-Information und in Abhängigkeit von der zweiten Latenz-Information zu bestimmen.

Dabei ist die Service Area, in der sich die zweite Nutzereinheit befindet, identisch mit der Service Area ist, in der sich die erste Nutzereinheit 100 befindet, oder aber, die Service Area, in der sich die zweite Nutzereinheit befindet, ist unterschiedlich zu der Service Area, in der sich die erste Nutzereinheit 100 befindet.

Ausführungsformen basieren darauf, dass z.B. eine Komponente auf der Kommunikationseinheit (die Kommunikationseinheit ist z.B. eine Basisstation) oder eine Komponente im Netz, welche die Service Area bedient, die Daten betreffend die Zuverlässigkeit und/oder die Latenz erfasst, sammelt und dann in Form einer Service Area Beschreibung der ersten Nutzereinheit zur Verfügung stellt. Es findet zur Bereitstellung der Parameter keine direkte Kommunikation zwischen der zweiten Nutzereinheit und der ersten Nutzereinheit 100 statt.

Die Zuverlässigkeit einer Kommunikationsverbindung kann beispielsweise mittels der PDR (Packet Delivery Ratio; deutsch: Paket-Lieferrate) z.B. durch die Basisstation bestimmt werden.

Zusätzlich oder alternativ kann die Zuverlässigkeit der Kommunikationsverbindung z.B. mittels der PDR z.B. durch die erste Nutzereinheit 100 bestimmt werden.

Zusätzlich oder alternativ können RSRP (Reference Signal Received Power; deutsch: Leistung des empfangenen Referenzsignals) und RSSI (Received Signal Strength Indication; deutsch: Indikation der Stärke des empfangen Signals) von den Endgeräten gemessen werden.

Indirekt stehen RSRP und RSSI in Form von sogenannten Measurement Reports (deutsch: Messberichten) dann auch der Basisstation zur Verfügung, wobei es sich dann nicht 1-zu-1 um die Werte von RSRP und/oder RSSI handeln muss. Die Berichte werden von den Endgeräten, z.B. laut Standard, periodisch an die Basisstation gesendet, um beispielsweise den Übergang von einer zu einer anderen Zelle zu koordinieren.

In bevorzugten Ausführungsformen kann also die PDR eingesetzt werden. Ergänzend hierzu oder in anderen Ausführungsformen kann z.B. eine spezifische Berechnung aus z.B. RSRP/RSSI verwendet werden.

Gemäß einer Ausführungsform kann die Kommunikationseinheit z.B. eine Basisstation sein. Dabei kann das Empfangsmodul 120 z.B. eingerichtet sein, die Nachricht mit der zweiten Zuverlässigkeits-Information oder mit der zweiten Latenz-Information von der Basisstation zu empfangen..

Bei der Kommunikationseinheit kann es sich beispielsweise um einen GeoService handeln.

In einer Ausführungsform kann die erste Kommunikationsverbindung z.B. eine Kommunikationsverbindung zwischen der ersten Nutzereinheit 100 und der Kommunikationseinheit (z.B. eine Basisstation) sein. Dabei kann die zweite Kommunikationsverbindung z.B. eine Kommunikationsverbindung zwischen der Kommunikationseinheit und der zweiten Nutzereinheit sein.

Gemäß einer Ausführungsform kann, wenn die Service Area, in der sich die zweite Nutzereinheit befindet, unterschiedlich zu der Service Area ist, in der sich die erste Nutzereinheit 100 befindet, die Prozessoreinheit 130 z.B. ausgebildet sein, die Gesamtzuverlässigkeit der Gesamt-Kommunikationsverbindung zwischen der ersten Nutzereinheit 100 und der zweiten Nutzereinheit in Abhängigkeit von der ersten Zuverlässigkeits-Information und in Abhängigkeit von der zweiten Zuverlässigkeits-Information zu bestimmen, oder die Gesamtlatenz der Gesamt-Kommunikationsverbindung zwischen der ersten Nutzereinheit 100 und der zweiten Nutzereinheit in Abhängigkeit von der ersten Latenz-Information und in Abhängigkeit von der zweiten Latenz-Information zu bestimmen. Dabei kann, wenn die Service Area, in der sich die zweite Nutzereinheit befindet, identisch mit der Service Area ist, in der sich die erste Nutzereinheit 100 befindet, die Prozessoreinheit 130 z.B. ausgebildet sein, die Gesamtzuverlässigkeit der Gesamt-Kommunikationsverbindung zwischen der ersten Nutzereinheit 100 und der zweiten Nutzereinheit in Abhängigkeit von der ersten Zuverlässigkeits-Information aber nicht in Abhängigkeit von der zweiten Zuverlässigkeits-Information zu bestimmen, oder die Gesamtlatenz der Gesamt-Kommunikationsverbindung zwischen der ersten Nutzereinheit (100) und der zweiten Nutzereinheit in Abhängigkeit von der ersten Latenz-Information aber nicht in Abhängigkeit von der zweiten Latenz-Information zu bestimmen.

Befinden sich also die erste Nutzereinheit 100 und die zweite Nutzereinheit in derselben Service Area, so kann die erste Nutzereinheit 100 ausgebildet sein, die Gesamtzuverlässigkeit und/oder die Gesamt-Latenz lediglich basierend auf ihren eigenen Zuverlässigkeits- und/oder Latenz-Informationen über die (eigene) Service Area zu bestimmen, denn die erste Nutzereinheit 100 und die zweite Nutzereinheit befinden sich ja in derselben Service Area.

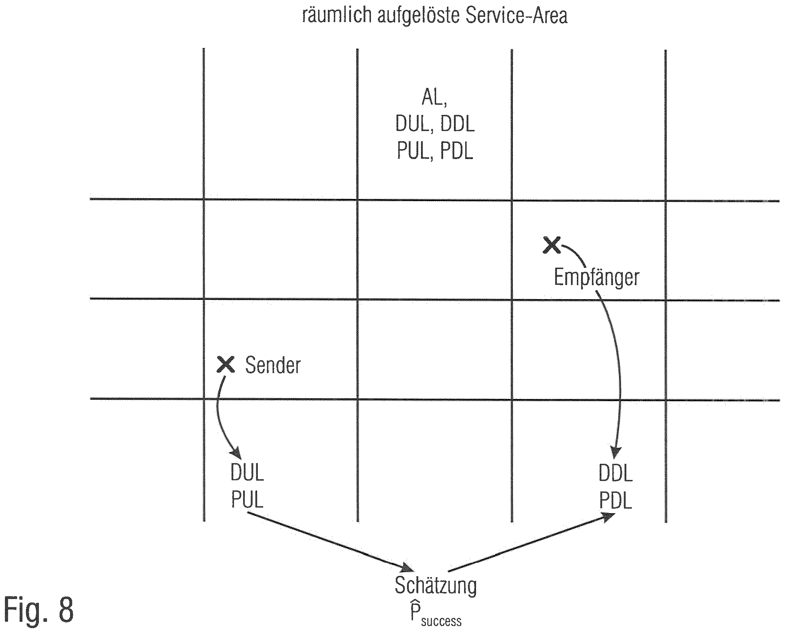

Alternativ kann die Service Area aber auch eine räumlich aufgelöste Service Area sein (siehe weiter unten zu Fig. 8). In solchen Ausführungsformen würde die erste Nutzereinheit 100 dann wieder auf die Zuverlässigkeits- und Latenzinformationen von der Kommunikationseinheit (z.B. der Basisstation) zurückgreifen, wenn sich die erste Nutzereinheit 100 und die zweite Nutzereinheit nicht in demselben Gitterelement der räumlich aufgelösten Service Area befinden.

Gemäß einer Ausführungsform kann die Prozessoreinheit 130 z.B. ausgebildet sein, sowohl die Gesamtzuverlässigkeit der Gesamt-Kommunikationsverbindung zwischen der ersten Nutzereinheit 100 und der zweiten Nutzereinheit in Abhängigkeit von der ersten Zuverlässigkeits-Information und in Abhängigkeit von der zweiten Zuverlässigkeits-Information zu bestimmen, als auch die Gesamtlatenz der Gesamt-Kommunikationsverbindung zwischen der ersten Nutzereinheit 100 und der zweiten Nutzereinheit in Abhängigkeit von der ersten Latenz-Information und in Abhängigkeit von der zweiten Latenz-Information zu bestimmen.

In einer Ausführungsform kann die Prozessoreinheit 130 z.B. ausgebildet sein, abhängig von zumindest der Gesamt-Kommunikationsverbindung oder abhängig von zumindest der Gesamt-Latenz zu entscheiden, ob ein Datenpaket zu der zweiten Nutzereinheit gesendet wird, oder nicht.

Gemäß einer Ausführungsform kann die Prozessoreinheit 130 z.B. ausgebildet sein, sowohl abhängig von der Gesamt-Kommunikationsverbindung als auch abhängig von der Gesamt-Latenz zu entscheiden, ob ein Datenpaket zu der zweiten Nutzereinheit gesendet wird, oder nicht.

In einer Ausführungsform kann die Prozessoreinheit 130 z.B. ausgebildet sein, eine Gesamtzuverlässigkeit einer Gesamt-Kommunikationsverbindung zwischen der ersten Nutzereinheit 100 und der zweiten Nutzereinheit in Abhängigkeit von einem Ergebnis einer Multiplikation der ersten Zuverlässigkeit der ersten Kommunikationsverbindung mit der zweiten Zuverlässigkeit der zweiten Kommunikationsverbindung zu bestimmen.

Gemäß einer Ausführungsform kann die Prozessoreinheit 130 z.B. ausgebildet sein, eine Gesamtlatenz einer Gesamt-Kommunikationsverbindung zwischen der ersten Nutzereinheit 100 und der zweiten Nutzereinheit in Abhängigkeit von einem Ergebnis einer Summe der ersten Latenz der ersten Kommunikationsverbindung und der zweiten Latenz der zweiten Kommunikationsverbindung zu bestimmen.

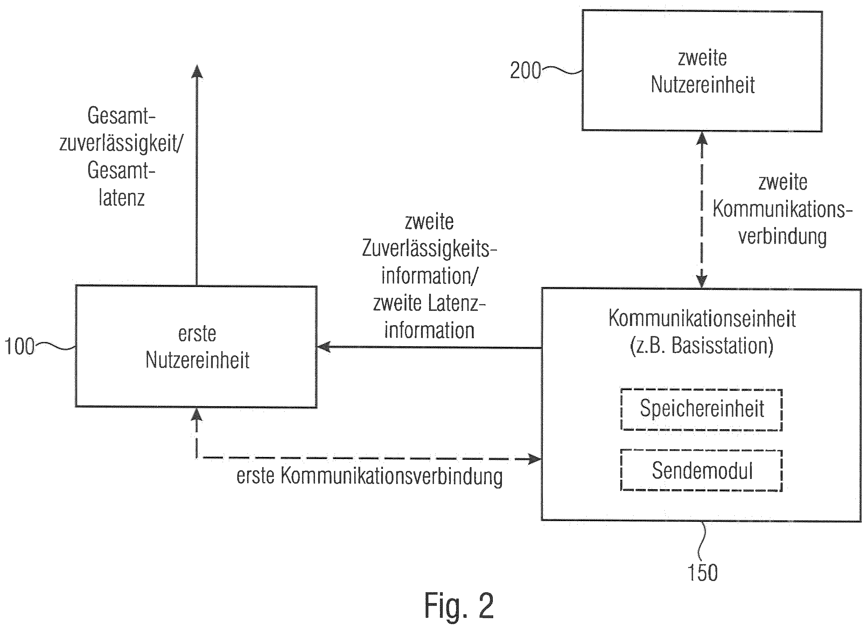

Fig. 2 zeigt ein System gemäß einer Ausführungsform.

Das System umfasst die oben beschriebene erste Nutzereinheit 100, die oben beschriebene Kommunikationseinheit 150 und die oben beschriebene zweite Nutzereinheit 200.

Die Kommunikationseinheit 150 weist eine Speichereinheit auf, die eingerichtet ist, zumindest die zweite Zuverlässigkeits-Information über die zweite Zuverlässigkeit der zweiten Kommunikationsverbindung für die Service Area zu speichern, in der sich die zweite Nutzereinheit 200 befindet, oder zumindest die zweite Latenz-Information über die zweite Latenz der zweiten Kommunikationsverbindung für die Service Area zu speichern, in der sich die zweite Nutzereinheit 200 befindet.

Des Weiteren weist die Kommunikationseinheit 150 ein Sendemodul auf, das eingerichtet ist, die Nachricht zu der ersten Nutzereinheit 100 zu senden, wobei die Nachricht zumindest die zweite Zuverlässigkeits-Information oder zumindest die zweite Latenz-Information umfasst.

In einer Ausführungsform kann in dem System der Fig. 2 die Kommunikationseinheit 150 z.B. eine Basisstation sein, die die erste Kommunikationsverbindung kann z.B. eine Kommunikationsverbindung zwischen der ersten Nutzereinheit 100 und der Kommunikationseinheit 150 sein, und die zweite Kommunikationsverbindung kann z.B. eine Kommunikationsverbindung zwischen der Kommunikationseinheit 150 und der zweiten Nutzereinheit 200 sein.

Gemäß einer Ausführungsform kann die Kommunikationseinheit 150 z.B. ein GN Router sein, der ausgebildet sein kann, der ersten Nutzereinheit 100 mitzuteileilen, welche Service Area der ersten Nutzereinheit 100 zugeordnet ist, und der z.B. ausgebildet sein kann, der zweiten Nutzereinheit 200 mitzuteileilen, welche Service Area der zweiten Nutzereinheit 200 zugeordnet ist.

Gemäß einer Ausführungsform kann die zweite Nutzereinheit 200 z.B. ebenfalls wie eine oben beschriebene erste Nutzereinheit der Fig. 1 ausgebildet sein.

Nachfolgend werden weitere Ausführungsbeispiele der Erfindung detailliert beschrieben:

Das Vorgehen der Verbesserung der Schätzung der Ende-zu-Ende Link-Qualität lässt sich in drei Aufgabenbereiche gliedern:

Der erste Aufgabenbereich betrifft die Erkennung der Service Area. Hierzu werden beispielsweise statische Konfiguration oder lernende Methoden eingesetzt.

Der zweite Aufgabenbereich betrifft eine Verteilung der Service Area an die Clients (hier Teilnehmerknoten/ Sender). Die Clients können dabei z.B. die erste Nutzereinheit 100 und die zweite Nutzereinheit 200 sein. Dies kann durch statische Vor-Konfiguration in Clients erfolgen.

Ferner kann ein separater (Web-) Dienst zur Verteilung der Informationen über Service Area(s) eingesetzt werden.

Des Weiteren kann eine dynamische Verteilung der Service Area zur Laufzeit über einen oder mehrere Verteildienste (GN Router, ggf. auf MEC) (GN = Gateway Network; deutsch Netzübergang Netzwerk); erfolgen. Details des Ablaufs sind in den Kommunikationsszenarien beschrieben.

Eine weitere Option zur Verbesserung der nahtlosen Schätzung in Randbereichen kann durch Verteilen der eigenen Service Area an alle Teilnehmer in der Service Area mit hoher oder adaptiver Auflösung (zeitlich und/oder räumlich) erfolgen.

Zusätzlich dazu kann ein Verteilen der Service Areas der angrenzender Service Areas mit geringerer Auflösung (zeitlich und/oder räumlich), ggf. adaptiv, erfolgen.

Der dritte Aufgabenbereich betrifft die Verarbeitung der Informationen über Service Area(s) im Client (Sender) zur Schätzung der Ende-zu-Ende Link-Qualität.

Vorhandene Information im Sender über das geografische Zielgebiet für die Datenübertragung (GeoNetworking Destination Area (Geo-Broadcast, Geo-Anycast) oder Position (Geo-Unicast)) lassen sich im Sender mit der (konfigurierten/ erlernten/empfangenen) Service Area abgleichen, um die Schätzung für die Wahrscheinlichkeit zu verbessern, dass ein Paket in einer vorgegebenen Zeitspanne vom Empfänger empfangen wird, bzw. die Konfidenz der Schätzung zu verbessern.

Im Folgenden werden unterschiedliche Kommunikationsszenarien betrachtet.

Grundsätzlich unterscheidet man drei verschiedene Kommunikationsszenarien, die sich vor allem in der Zusammensetzung der Komponenten auf der Infrastrukturseite unterschieden und damit auch im Ablauf der Kommunikationsnachrichten. Resultierend ergeben die Szenarien unterschiedliche Konfidenz bei der Schätzung der Zuverlässigkeit und Latenz einer Datenübertragung vom Sender zum Empfänger.

In einem ersten Kommunikationsszenario befinden sich Sender und Empfänger .in gleicher Service Area.

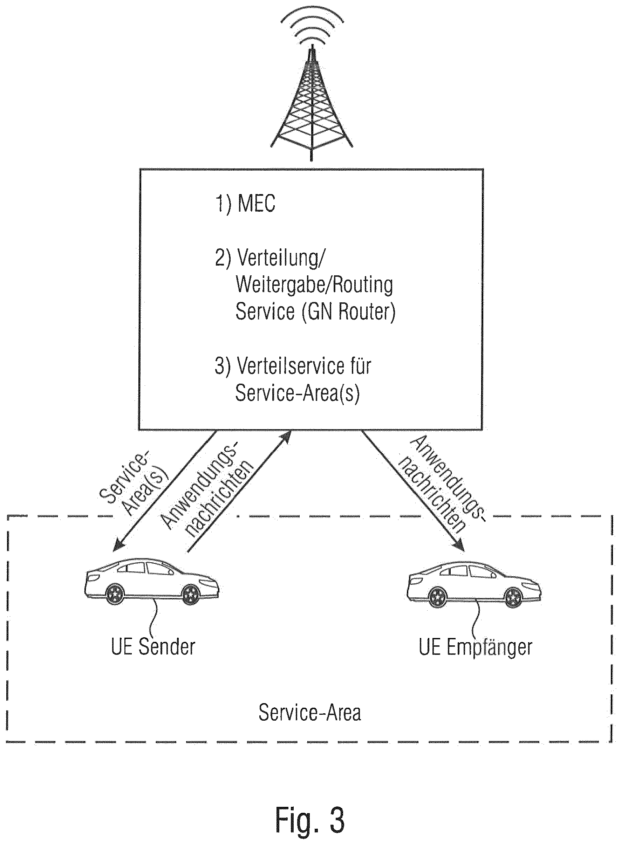

So befinden sich in Fig. 3 Sender und Empfänger in der gleichen Service Area.

In einem solchen Szenario möchte beispielsweise der Sender (UEsource) eine Nachricht an Empfänger (UEdest) senden. Sender und Empfänger befinden sich in gleicher Service Area.

Die GN Router (z.B. auf MEC) verteilt periodisch oder ereignisbasiert die Service Area des Empfängers an den Sender. Damit kann der Sender seine eigene Link-Qualität abschätzen, sowie die Link-Qualität des Empfängers.

Da sich Sender und Empfänger in gleicher Service Area befinden, ist keine Kommunikation zwischen weiteren Komponenten nötig, die eine zusätzliche Abschätzung der Zuverlässigkeit oder Latenz erfordert. Damit kann die Zuverlässigkeit und Latenz der Datenübertragung (Ende-zu-Ende) sehr genau geschätzt werden, die Konfidenz der Schätzung ist sehr hoch.

In einem zweiten Kommunikationsszenario befinden sich Sender und Empfänger in unterschiedlichen Service Areas.

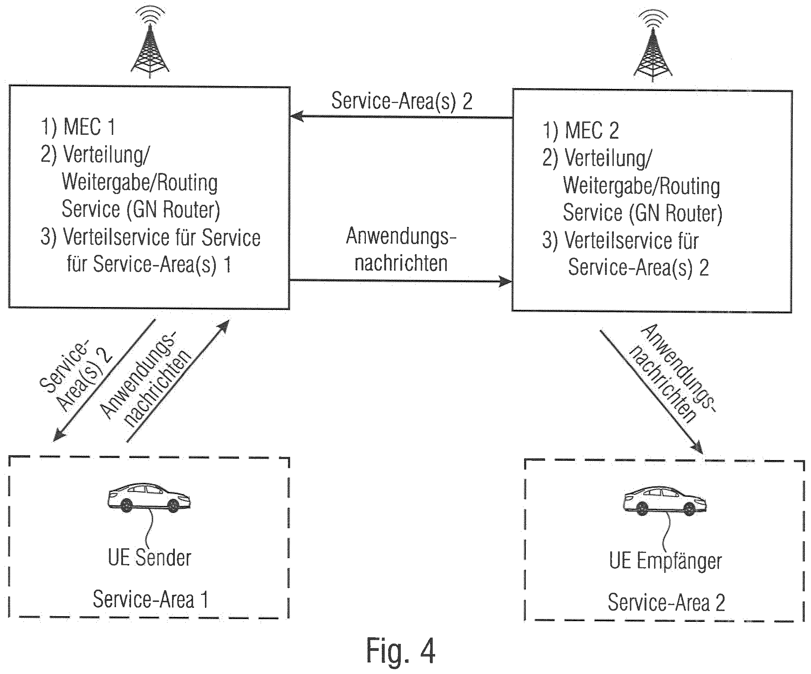

So zeigt Fig. 4 ein Kommunikationsszenario, bei dem sich Sender und Empfänger in unterschiedlichen Service Areas befinden.

Die Managementkomponenten der einzelnen Service Areas (GN Router/ MEC) sind durch einen gut abschätzbaren Link verbunden.

In einem solchen (z.B. Inter-MEC) Szenario möchte der Sender (UEsource) beispielsweise eine Nachricht an Empfänger (UEdest) senden. Sender und Empfänger befinden sich in unterschiedlichen Service Areas. Für den Sender ist keine Einschätzung über die Link-Qualität des Empfängers (z.B. Last in der Zelle und Last im Server) möglich.

Die GN Router (z.B. auf MEC2) verteilt periodisch oder ereignisbasiert die Service Area 2 des Empfängers an MEC1, der wiederum periodisch oder ereignisbasiert diese Service Area 2 an den Sender verteilt. Damit kann der Sender seine eigene Link-Qualität abschätzen, sowie die Link-Qualität des Empfängers.

Da sich Sender und Empfänger in unterschiedlichen Service Areas befinden, ist eine zusätzliche Kommunikation zwischen den GN Routern (z.B. MECs) nötig, die eine zusätzliche Abschätzung der Zuverlässigkeit oder Latenz erfordert. Dabei kann davon ausgegangen werden, dass die Zuverlässigkeit des Links sehr hoch ist und die durch die zusätzliche Kommunikation entstehende Latenz weitgehend konstant ist. Damit kann die Zuverlässigkeit und Latenz der Datenübertragung vom Sender zum Empfänger (Ende-zu-Ende) mit hoher Konfidenz geschätzt werden.

In einer Ausführungsform kann, wenn die Service Area, in der sich die zweite Nutzereinheit befindet, unterschiedlich zu der Service Area ist, in der sich die erste Nutzereinheit 100 befindet, die Prozessoreinheit 130 beispielsweise ausgebildet sein, die Gesamtzuverlässigkeit der Gesamt-Kommunikationsverbindung zu bestimmen und die Gesamt-Zuverlässigkeit um einen ersten Wert herabzusetzen, oder die Gesamtlatenz der Gesamt-Kommunikationsverbindung zwischen der ersten Nutzereinheit (100) und der zweiten Nutzereinheit zu bestimmen und um einen zweiten Wert zu erhöhen. Dabei kann, wenn die Service Area, in der sich die zweite Nutzereinheit befindet, identisch mit der Service Area ist, in der sich die erste Nutzereinheit 100 befindet, die Prozessoreinheit 130 beispielsweise ausgebildet sein, die Gesamtzuverlässigkeit der Gesamt-Kommunikationsverbindung zu bestimmen und die Gesamt-Zuverlässigkeit nicht um den ersten Wert herabzusetzen, oder die Gesamtlatenz der Gesamt-Kommunikationsverbindung zwischen der ersten Nutzereinheit (100) und der zweiten Nutzereinheit zu bestimmen und nicht um den zweiten Wert zu erhöhen.

Wenn sich ein Empfänger nicht in der Service Area des Senders befindet, kann der Sender dies in bevorzugten Ausführungsformen auch feststellen und hieraus Schlussfolgerungen ziehen und gegebenenfalls Aktionen ableiten.

Beispielsweise kann, wenn sich der Empfänger in einer anderen Service Area wie der Sender befindet, vom Sender eine geringere (Gesamt-)Zuverlässigkeit und/oder ein höherer (Gesamt-)Delay geschätzt bzw. berechnet werden. Hierzu können historische Daten herangezogen werden. Z.B. kann auch zwischen MEC-Service Areas und Cloud-Service Areas unterschieden werden.

In einem dritten Kommunikationsszenario befinden sich Sender und Empfänger in unterschiedlichen Service Areas. Die Managementkomponenten der einzelnen Service Areas (GN Router/ MEC) sind - falls vorhanden - durch einen nicht gut abschätzbaren Link (v.a. bzgl. Latenz/Jitter) verbunden (z.B. Internet/ Backend).

In einem solchen Szenario möchte ein Sender (UEsource) eine Nachricht zu einem Empfänger (UEdest) senden. Sender und Empfänger befinden sich in unterschiedlichen Service Areas, die mit einem nicht gut abschätzbaren Link verbunden sind. Für den Sender ist keine Einschätzung über die Link-Qualität des Empfängers möglich (z .B. aufgrund von Last in der Zelle bzw. in den Zellen und der Last im Server bzw. den Servern).

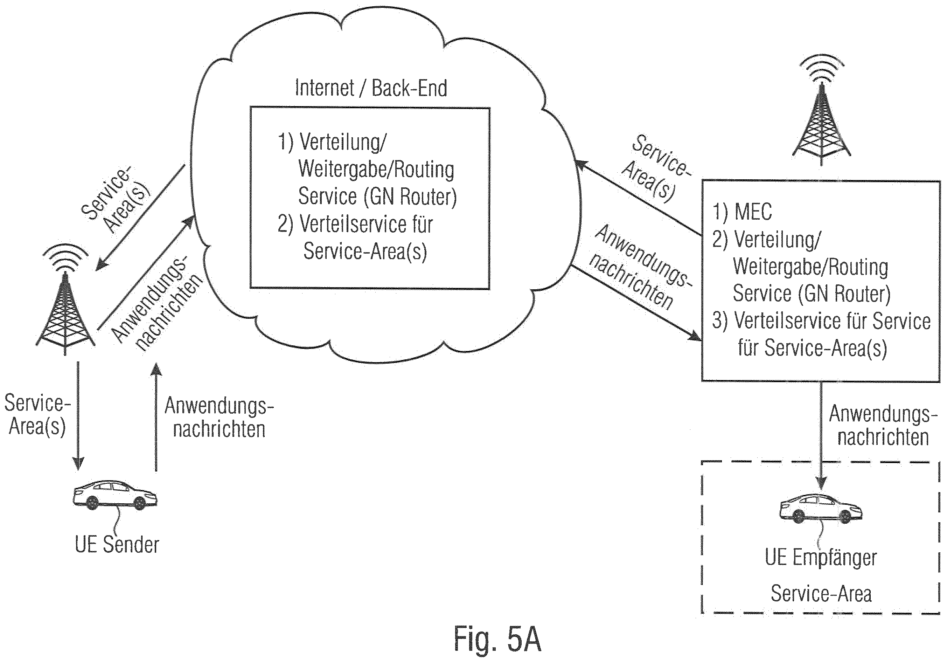

So zeigt Fig. 5a ein Szenario, bei dem sich der Empfänger in der Service Area des MEC befindet, und bei dem sich der Sender in keiner Service Area befindet.

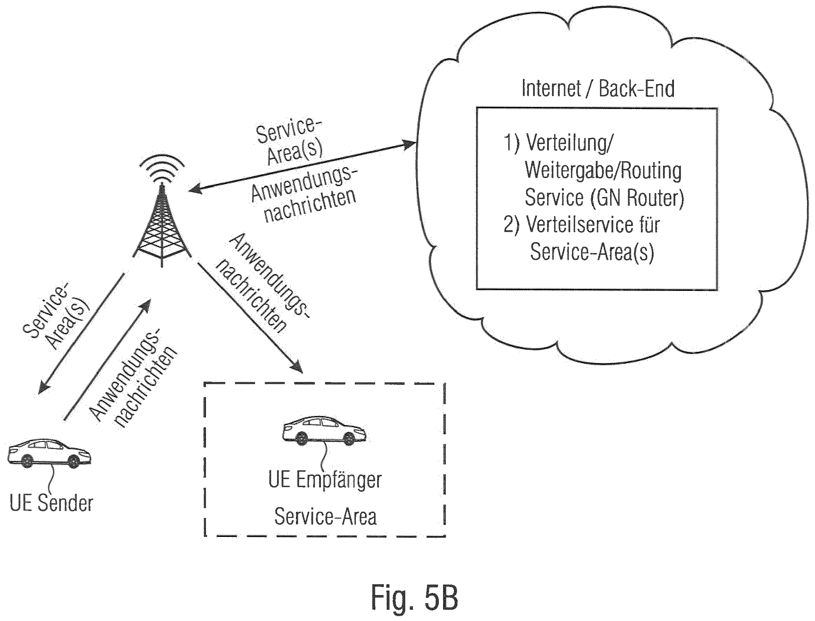

Fig. 5b zeigt ein Szenario, bei dem sich der Empfänger in der Service Area von GN Router befindet, und Sender in keiner Service Area befindet.

Der oder die GN Router (der sich in Fig. 5a im MEC befindet, und der sich in Fig. 5b im Backend ohne MEC befindet) verteilt/verteilen periodisch oder ereignisbasiert die Service Area des Empfängers an den Sender. Damit kann der Sender seine eigene Link-Qualität abschätzen, sowie die Link-Qualität des Empfängers.

Aufgrund der Verteilung der Komponenten ist eine zusätzliche Kommunikation zwischen den Komponenten inkl. einer Internet-/Backendkomponente nötig, die eine zusätzliche Abschätzung der Zuverlässigkeit oder Latenz erfordert. Die Zuverlässigkeit des Links und die durch die zusätzliche Kommunikation entstehende Latenz können weitgehend schwanken aber können anhand von Erfahrungswerten/Expertenwissen, Historie oder mit statistischen oder lernenden Methoden geschätzt werden. Damit kann die Zuverlässigkeit und vor allem die Latenz der Datenübertragung vom Sender zum Empfänger (Ende-zu-Ende) geschätzt werden, wenn auch mit niedrigerer Konfidenz als beim oben beschriebenen ersten Kommunikationsszenario und beim oben beschriebenen zweiten Kommunikationsszenario.

Eine Service Area kann beispielsweise beschrieben werden durch ein Polygon oder durch mehrere Polygone, einen oder mehrere Kreise, einen oder mehrere Ellipsen. Hierdurch kann z.B. der räumliche Bereich der Service Area beschrieben werden.

Ferner kann eine Service Area Metainformationen über eine Zuverlässigkeit der Datenübertragung aufweisen.

Ferner kann eine Service Area über mehrere Areas abgebildet sein. Die Service Area kann eine Hauptbereich aufweisen, der beispielsweise als zuverlässig angesehen werden kann. Ferner kann die Service Area einen Randbereich aufweisen, der beispielsweise als weniger zuverlässig angesehen werden kann.

Dabei kann es sich bei einer Service Area um eine zuverlässige Service Area handeln, die Randbereiche aufweist, die durch eine Entfernungsangabe beschrieben sind.

In einer weiteren Ausführungsform erfolgt die Verteilung der Service Areas mittels eines Coverage Grids (deutsch: gekachelte Fläche), das beispielsweise mittels Quadtree Kodierung (Quadtree: deutsch Quarternärbaum) skalierbar abbildbar ist.

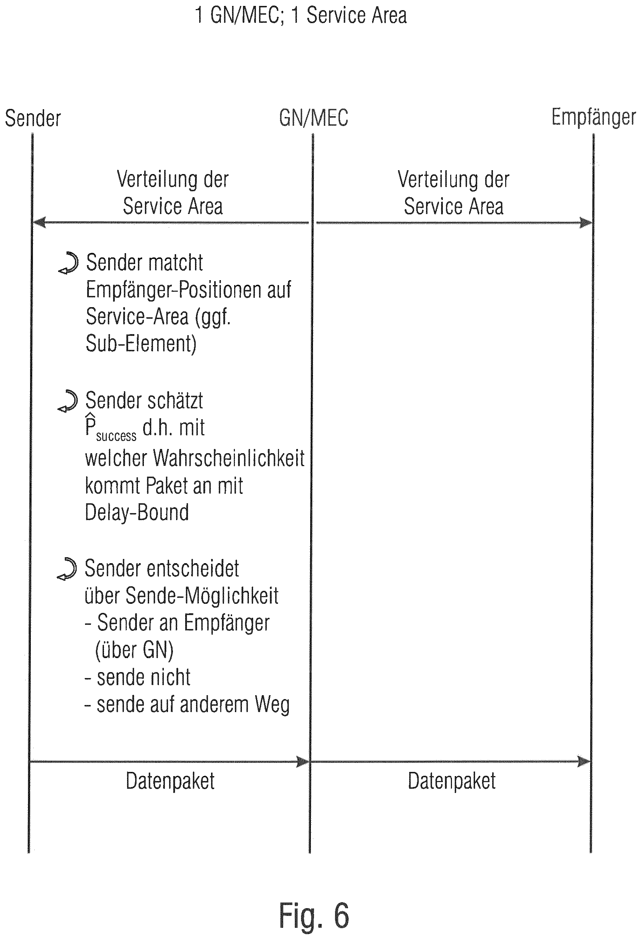

Im Folgenden wird ein erstes Kommunikationsszenario gemäß einer Ausführungsform beschrieben. Fig. 6 zeigt ein Flussdiagramm für ein solches Kommunikationsszenario gemäß einer Ausführungsform.

In einem ersten Schritt verteilt der GN/MEC die Service Areas auf Sender und Empfänger. Dem Sender wird dabei (mindestens) eine Service Area zugewiesen; ebenso wird dem Empfänger (mindestens) eine Service Area zugewiesen. Dies kann beispielsweise Dadurch geschehen, dass der GN/MEC dem Sender eine Nachricht mit entsprechenden Meta-Informationen zusendet. Ferner kann dies dadurch geschehen, dass der GN/MEC dem Empfänger eine weitere Nachricht mit entsprechenden Meta-Informationen zusendet.

In einem zweiten Schritt matcht der Sender die Sender- und Empfänger-Positionen auf die Service Area (ggf. Sub-Element).

In einem dritten Schritt schätzt der Sender $\hat{P}_{success}$. $\hat{P}_{success}$ besagt, mit welcher Wahrscheinlichkeit kommt Paket mit Delay-Bound (deutsch: Verzögerung im Rahmen) an.

In einem vierten Schritt entscheidet der Sender über die Sende-Möglichkeit. Möglichkeiten sind, beispielsweise: (1) Sende an Empfänger (über GN). (2) Sende nicht. (3) Sende auf einem anderen Weg.

In einem fünften Schritt sendet der Sender dann gegebenenfalls das Datenpaket.

Ein GN/MEC kann dabei als eine Service Area angesehen werden.

In obigem Ablaufszenario kann es sich bei den Meta-Informationen um eine durchschnittliche Last (englisch: Average Load), um einen Delay (deutsch: Verzögerung), um einen PDR (räumlich aufgelöst) handeln.

PDR ist dabei das Packet Delivery Ratio (deutsch: Paket-Lieferrate).

$P_{(Delay<max)} = PDR_{EZE} \cdot D(d \leq d_{max})$. Dies liefert die durchschnittliche PDR.

$$\hat{\bar{P}}_{success} = \bar{P}_{UL} \cdot \bar{P}_{DL} \cdot D'(d_{UL} + d_{DL} \leq d_{max})$$

$D'(d_{UL} + d_{DL} \leq d_{max})$ ist die gemeinsame Verteilung aus UL Delay und DL Delay (UL Delay = upload Delay; DL Delay = download Delay).

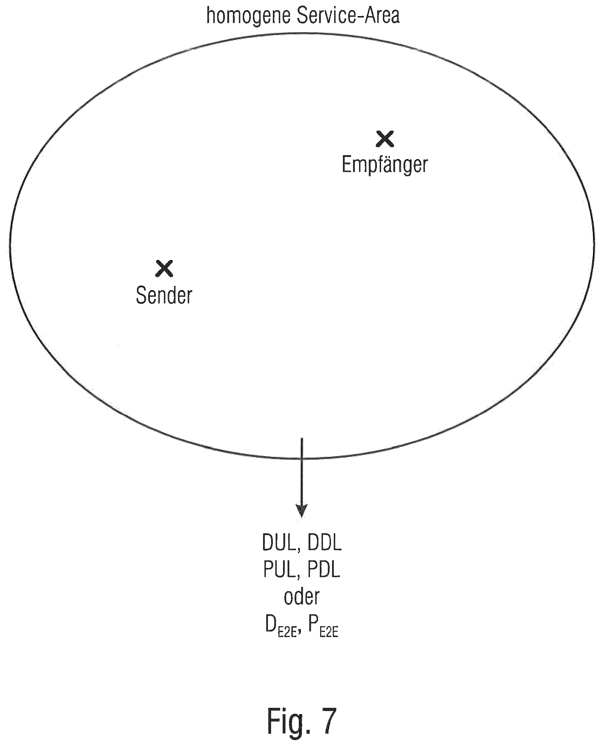

Fig. 7 zeigt eine homogene Service Area gemäß einer Ausführungsform.

Demgegenüber zeigt Fig. 8 eine räumlich aufgelöste Service Area gemäß einer Ausführungsform.

Bei einer räumlich aufgelösten Service Area gibt es eine durchschnittliche Last (average load: AL), eine Delay Distribution Upload (deutsch: Verzögerungsverteilung Upload, DUL), eine Delay Distribution Download (deutsch: Verzögerungsverteilung Download, DDL), eine PDR UL (Paket-Lieferrate Upload) und eine PDR DL (Paketlieferrate Download). Diese Elemente können z.B. pro Grid Element (pro Gitterelement) existieren.

Der Schritt des Schätzens von $\hat{P}_{success}$ kann dabei beispielsweise umfassen, dass der Sender vom Empfänger Informationen über die Zuverlässigkeit der Datenverbindung in der Service Area des Empfängers einholt.

In einem zweiten Kommunikationsszenario, wird eine Formel aus dem obigen Kommunikationsszenario wie Folgt abgewandelt:

$$\hat{\bar{P}}_{success} = \bar{P}_{UL} \cdot \bar{P}_{M2M} \cdot \bar{P}_{DL} \cdot D''(d_{UL} + d_{M2M} + d_{DL} \leq d_{max})$$

$d_{M2M}$ bezeichnet dabei den Delay (die Verzögerung) MEC zu MEC.

Gegebenenfalls existiert eine geringere zeitliche Auflösung von Informationen aus entfernten Service Areas für eine bessere Skalierung.

In einem dritten Kommunikationsszenario befinden sich Sender und/oder Empfänger nicht in der Service Area. Eine entsprechende Schätzung kann dann durch eine Worst Case Annahme (technologieabhängig) ersetzt werden. Gemäß dem Stand der Technik könnte hier eine schlechte Schätzung vorgenommen werden.

Nachfolgend wird beispielhalt eine erste Beispielsituation gemäß einem Ausführungsbeispiel beschrieben: Ein Sender befindet sich dabei in Service Area 1; ein Empfänger befindet sich in einer anderen Service Area (Service Area 2).

Auf Anfrage von dem Sender teilt eine Basisstation dem Sender mit, dass die Zuverlässigkeit der Kommunikationsverbindung in der Service Area 2 bei 98 % liegt (im Mittel sind 98 von 100 Kommunikationsversuchen erfolgreich). Die Latenz würde in Service Area 2 bei 20 ms liegen.

Der Sender wiederum geht davon aus, dass in seiner eigenen Service Area 1 die Zuverlässigkeit der Kommunikationsverbindung bei 97 % liegen würde (im Mittel sind 97 von 100 Kommunikationsversuchen erfolgreich). Die Latenz würde in Service Area 1 bei 15 ms liegen.

Der Sender wiederum berechnet sich aus der Zuverlässigkeit der Kommunikationsverbindung von Service Area 1 und Service Area 2 eine Gesamtzuverlässigkeit der Kommunikationsverbindung gemäß:

Gesamtzuverlässigkeit = Zuverlässigkeit Service Area 1 · Zuverlässigkeit Service Area 2

Im konkreten Beispiel: Gesamtzuverlässigkeit = (97 / 100) · (98 / 100) = 0,9506 = 95,06 %

Ferner kann der Sender die Gesamt-Latenz der Kommunikationsverbindung beispielsweise als Summe der Latenz von Service Area 1 und Service Area 2 berechnen:

Gesamt-Latenz = Latenz Service Area 1 + Latenz Service Area 2

Im konkreten Beispiel: Gesamt-Latenz = 15 ms + 20 ms = 35 ms.

Nachfolgend wird beispielhalt eine zweite Beispielsituation gemäß einem weiteren Ausführungsbeispiel beschrieben: Ein Sender befindet sich dabei in Service Area 1; ein Empfänger befindet sich in derselben Service Area (Service Area 1).

Der Sender kann sich in einem solchen Szenario beispielsweise auf seine eigenen Daten über Zuverlässigkeit und Latenz in der (eigenen) Service Area 1 verlassen, und benötigt in diesem Fall keine Daten von der Basisstation über Zuverlässigkeit und Latenz in der eigenen Service Area 1.

Beispielsweise geht der Sender wiederum davon aus, dass in der eigenen Service Area 1 die Zuverlässigkeit der Kommunikationsverbindung bei 98,2 % liegen würde (im Mittel sind 982 von 1000 Kommunikationsversuchen erfolgreich). Die Latenz würde in Service Area 1 seinen bei 13,2 ms liegen. In einer Ausführungsform fragt der Sender dann nicht bei der Basisstation an, wie die Basisstation die Zuverlässigkeit und Latenz in der eigenen Service Area einschätzt, sondern verwendet die eigenen Daten. Für die Gesamt-Zuverlässigkeit der Kommunikationsverbindung zwischen Sender und Empfänger ergibt sich dann.

$$\text{Gesamt-Zuverlässigkeit (Eigene Zuverlässigkeitsannahme)}^2 = 0{,}982^2 = 96{,}4324\ \%.$$

(Die gesamte Kommunikationsverbindung zwischen Sender und Empfänger teilt sich auf in eine erste Kommunikationsverbindung in Service Area 1 zwischen Sender und Basisstation und eine zweite Kommunikationsverbindung in Service Area 2 zwischen Basisstation und Empfänger).

Für die Gesamt-Latenz gilt entsprechend:

$$\text{Gesamt-Latenz} = 2 \cdot \text{(Eigene Latenzannahme)} = 2 \cdot 13{,}2\ \text{ms} = 26{,}4\ \text{ms.}$$

In einer anderen Ausführungsform fragt der Sender dennoch bei der Basisstation an, und auf die Anfrage von dem Sender teilt die Basisstation dem Sender mit, dass ihren Daten nach die Zuverlässigkeit der Kommunikationsverbindung in der Service Area 1 bei 98,6 % liegt (im Mittel sind 986 von 1000 Kommunikationsversuchen erfolgreich). Die Latenz würde in Service Area 1 bei 12,6 ms liegen.

Die eigenen Daten des Senders geben jedoch an, dass in der Service Area 1 die Zuverlässigkeit der Kommunikationsverbindung bei 98,2 % liegen würde (im Mittel sind 982 von 1000 Kommunikationsversuchen erfolgreich). Die Latenz würde in Service Area 1 bei 13,2 ms liegen.

Der Sender könnte aus den unterschiedlichen Zuverlässigkeitsdaten der Kommunikationsverbindung von Service Area 1 eine Gesamtzuverlässigkeit der Kommunikationsverbindung berechnen gemäß:

$$\text{Gesamt-Zuverlässigkeit in Service Area 1} =$$
$$\text{Eigene Zuverlässigkeitsannahme} \cdot \text{Zuverlässigkeit laut Basisstation für Empfänger}$$

Im konkreten Beispiel: Berechnete Zuverlässigkeit = 98,2 % · 98,6 % = 96,8252 %.

Ferner kann der Sender die Gesamt-Latenz der Kommunikationsverbindung beispielsweise als Summe der eigenen Annahme über die Latenz und der Annahme der Basisstation über die Latenz bestimmen:

$$\text{Gesamt-Latenz} = \text{Latenz laut Sender} + \text{Latenz laut Basisstation für Empfänger}$$

Im konkreten Beispiel: Gesamt-Latenz = 13,2 ms + 12,6 ms = 25,8 ms.

Es ist auch möglich, dass z.B. die Basisstation oder z.B. der GeoService Konfidenzwerte vorhält, die jeweils ein Maß angeben, was die Zuverlässigkeit und/oder Latenz einer Kommunikationsverbindung in einer für Sender und Empfänger gemeinsamen Service Area (Service Area 1) betrifft. Die Basisstation kann dem Sender einen Konfidenzwert für die Zuverlässigkeit der Kommunikationsverbindung in der gemeinsamen Service Area mitteilen. Ebenso kann die Basisstation dem Sender einen Konfidenzwert für die Latenz der Kommunikationsverbindung in seiner Service Area (Service Area 1) mitteilen.

Diese Konfidenzwerte kann der Sender dann für die Berechnung der Zuverlässigkeit der Kommunikationsverbindung in Service Area 1 bzw. für die Berechnung der Latenz der Kommunikationsverbindung in Service Area 1 einbeziehen, z.B. mit der Formel:

$$\text{Berechnete Zuverlässigkeit in Service Area 1} =$$
$$(\text{Zuverlässigkeit laut Sender} \cdot \text{Konfidenzwert}_{ZuverlässigkeitSchätzungSender} \cdot$$
$$\cdot\ \text{Zuverlässigkeit laut Basisstation} \cdot \text{Konfidenzwert}_{ZuverlässigkeitSchätzungBasisstation}) /$$
$$/\ (\text{Konfidenzwert}_{ZuverlässigkeitSchätzungSender} + \text{Konfidenzwert}_{ZuverlässigkeitSchätzungBasisstation})$$

$$\text{Berechnete Latenz in Service Area 1} =$$
$$(\text{Latenz laut Sender} \cdot \text{Konfidenzwert}_{\text{LatenzSchätzungSender}} +$$
$$+ \text{Latenz laut Basisstation} \cdot \text{Konfidenzwert}_{\text{LatenzSchätzungBasisstation}}) /$$
$$/ (\text{Konfidenzwert}_{\text{LatenzSchätzungSender}} + \text{Konfidenzwert}_{\text{LatenzSchätzungBasisstation}})$$

Es bedeuten:

Zuverlässigkeit laut Sender: Die Einschätzung des Senders über die Zuverlässigkeit einer Kommunikationsverbindung in der Service Area (z.B. Service Area 1).

Konfidenzwert$_{\text{zuverlässigkeitSchätzungSender}}$ : Der Konfidenzwert des Senders, mit dem der Sender ein Maß für die Sicherheit seiner Einschätzung angibt, was die Zuverlässigkeit einer Kommunikationsverbindung in der Service Area (Service Area 1) betrifft.

Zuverlässigkeit laut Basisstation: Die Einschätzung der Basisstation über die Zuverlässigkeit einer Kommunikationsverbindung in der Service Area (z.B. Service Area 1).

Konfidenzwert$_{\text{zuverlässigkeitSchätzungBasisstation}}$ : Der Konfidenzwert der Basisstation, mit dem die Basisstation ein Maß für die Sicherheit ihrer Einschätzung angibt, was die Zuverlässigkeit einer Kommunikationsverbindung in der Service Area (Service Area 1) betrifft.

Latenz laut Sender: Die Einschätzung des Senders über die Latenz einer Kommunikationsverbindung in der Service Area (z.B. Service Area 1).

Konfidenzwert$_{\text{LatenzSchätzungSender}}$ : Der Konfidenzwert des Senders, mit dem der Sender ein Maß für die Sicherheit seiner Einschätzung angibt, was die Latenz einer Kommunikationsverbindung in der Service Area (Service Area 1) betrifft.

Latenz laut Basisstation: Die Einschätzung der Basisstation über die Latenz einer Kommunikationsverbindung in der Service Area (z.B. Service Area 1).

Konfidenzwert$_{\text{LatenzSchätzungBasisstation}}$ : Der Konfidenzwert der Basisstation, mit dem die Basisstation ein Maß für die Sicherheit ihrer Einschätzung angibt, was die Latenz einer Kommunikationsverbindung in der Service Area (Service Area 1) betrifft.

In Ausführungsformen kann die Konfidenz bzw. der jeweilige Konfidenzwert beispielsweise auch oder alternativ in eine Worst Case Abschätzung einfließen, indem die geschätzte Erfolgswahrscheinlichkeit angepasst wird.

Manche Ausführungsformen bieten einen oder mehrere der nachfolgend beschriebenen Vorteile.

Einerseits realisieren manche der Ausführungsformen eine verbesserte Schätzung der Zuverlässigkeit oder Latenz bzw. der Erreichbarkeit unter Latenzanforderungen. Dies bietet zum Einen den Vorteil, dass die Qualität der Verbindung einer UEs und eNB/MEC (oder allgemeiner, im Mobilfunk) laufend überwacht wird. Von einer UE werden Statusnachrichten (Reports) an den eNB gesendet. Dies gewährleistet eine optimale Kommunikationsqualität zwischen UE und eNB (und ggf. einem Dienst im Internet/Backend. Bei einer Kommunikation zwischen zwei UEs hat das einzelne UE keine Informationen über die Verbindungsqualität des jeweils anderen UEs zu eNB . Will ein UE ein Paket zum anderen UE senden, kann es nicht einschätzen, ob das Paket das andere UE (die anderen UEs) innerhalb einer vorgegebenen Latenz erreicht. Mit der Verteilung und Verarbeitung der Service Areas kann ein UE eine verbesserte Schätzung erreichen. Durch die Schätzung kann auch ein Feedback an die Applikationen erzielt werden mit der Aussage, ob die Anforderungen erfüllt werden können oder nicht.

Zum anderen können in heterogenen Kommunikationssystemen mit mehreren Technologien oder Kanälen gleicher Technologie basierend auf verschiedenen Parametern der einzelnen Technologien und der Anforderungen der Applikation (u .a. bzgl. Zuverlässigkeit und Latenz) eine oder mehrere Technologien zur Kommunikation ausgewählt werden. Die Verteilung und Verwertung der Service Area in den Bewertungsalgorithmen verbessert die Schätzung bzw. die Konfidenz der Schätzung

Ausführungsformen der Erfindung werden im Rahmen von verschiedenen Anwendungen eingesetzt.

Durch Schätzung der Wahrscheinlichkeit einer erfolgreichen Datenübertragung in gewisser Zeitspanne können u.a. mehrere Stufen gemäß dem Graceful Degradation Konzept der Anwendungen abgebildet werden. Anwendungen gemäß Ausführungsformen sind, beispielsweise in 5G (Priorität 1 Anwendungen), Left Turn Assist, Intersection Movement Assist, High Definition Sensor Sharing, See-Trough, Cooperative Maneuvers (Lane Change/ Merge) sowie Platooning und Remote Vehicle Health Monitoring bzw. Remote Vehicle Control

Gemäß Ausführungsformen fließen die Ergebnisse der Schätzung in Algorithmen zu Network Selection bei spontanen Car2Car-Warnnachrichten in ein Zielgebiet, wie Emergency Electronic Brake Light, Queue Warning. Liefert die Schätzung einen Wert unter Grenzwert, wird dabei eine andere Technologie zur Übertragung gewählt, die eine bessere Schätzung ergibt.

Eine weitere Anwendung gemäß einer Ausführungsform ist das Farming: Dabei handelt es sich um Anwendungen beispielsweise zur Fahrzeugvernetzung, u.a. Remote Vehicle Control bzw. Remote Monitoring.

Eine weitere Anwendung gemäß Ausführungsformen ist die Echtzeitanalyse von Videodaten für Remote Monitoring z.B. für eine Landmaschine, die innerhalb von einer Zeit angehalten werden muss, bei Gefahr. Hier sind verschiedene Qualitätsstufen in der Applikation möglich, abhängig von den vorhersagbaren QoS-Parametern (QoS = Quality of Service; deutsch: Dienstgüte) in der Kommunikation.

Weitere Anwendungsbereiche gemäß Ausführungsformen liegen vor allem für MEC beim IoT (Internet of Things; deutsch: Internet der Dinge), im Bereich Health (deutsch: Gesundheit), im Bereich der Augmented Reality (deutsch: erweiterte Wirklichkeit), Accelerated Video (deutsch: beschleunigtes Video), siehe auch [2] und [3].

Ausführungsbeispiele können z.B. bei der optimierten Ressourcennutzung von Frequenzspektren eingesetzt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen:

[1] ETSI, "ETSI EN 302 636-4-1 V1.2.1: Intelligent Transport Systems (ITS) Vehicular communications, GeoNetworking Part 4: Geographical addressing and forwarding for point-to-point and point-to-multipoint communications; Sub-part 1: Media-Independent Functionality," 2014

[2] ETSI White Paper No. 11, Mobile Edge Computing - A key technology towards 5G; First edition - September 2015; ISBN No. 979-10-92620-08-5; Zugriff am 25.10.2017: http://www.etsi.org/images/files/ETSIWhitePapers/etsi_wp11_mec_a_key_technology_towards_5g.pdf

[3] Multi-access Edge Computing; ETSI; Zugriff am 25.10.2017 unter: http://www.etsi.org/technologies-clusters/technologies/multi-access-edge-computing

**Patentansprüche**

**1.** Eine erste Nutzereinheit (100), umfassend,
eine Speichereinheit (110), die eingerichtet ist, zumindest eine erste Zuverlässigkeits-Information über eine erste Zuverlässigkeit einer ersten Kommunikationsverbindung für eine Service Area zu speichern, in der sich die erste Nutzereinheit (100) befindet, oder zumindest eine erste Latenz-Information über eine erste Latenz der ersten Kommunikationsverbindung für die Service Area zu speichern, in der sich die erste Nutzereinheit (100) befindet,
ein Empfangsmodul (120), das eingerichtet ist, eine Nachricht von einer Kommunikationseinheit zu empfangen, wobei die Nachricht zumindest eine zweite Zuverlässigkeits-Information über eine zweite Zuverlässigkeit einer zweiten Kommunikationsverbindung für eine Service Area umfasst, in der sich eine zweite Nutzereinheit (200) befindet, oder wobei die Nachricht zumindest eine zweite Latenz-Information über eine zweite Latenz der zweiten Kommunikationsverbindung für die Service Area umfasst, in der sich die zweite Nutzereinheit (200) befindet,
eine Prozessoreinheit (130), die ausgebildet ist, eine Gesamtzuverlässigkeit einer Gesamt-Kommunikationsverbindung zwischen der ersten Nutzereinheit (100) und der zweiten Nutzereinheit (200) in Abhängigkeit von der ersten Zuverlässigkeits-Information und in Abhängigkeit von der zweiten Zuverlässigkeits-Information zu bestimmen, oder eine Gesamtlatenz der Gesamt-Kommunikationsverbindung zwischen der ersten Nutzereinheit (100) und der zweiten Nutzereinheit (200) in Abhängigkeit von der ersten Latenz-Information und in Abhängigkeit von der zweiten Latenz-Information zu bestimmen,
wobei die Service Area, in der sich die zweite Nutzereinheit (200) befindet, identisch mit der Service Area ist, in der sich die erste Nutzereinheit (100) befindet, oder wobei die Service Area, in der sich die zweite Nutzereinheit (200) befindet, unterschiedlich zu der Service Area ist, in der sich die erste Nutzereinheit (100) befindet,
**dadurch gekennzeichnet, dass**, wenn die Service Area, in der sich die zweite Nutzereinheit (200) befindet, unterschiedlich zu der Service Area ist, in der sich die erste Nutzereinheit (100) befindet, die Prozessoreinheit (130) ausgebildet ist, die Gesamtzuverlässigkeit der Gesamt-Kommunikationsverbindung zu bestimmen und dazu die Gesamt-Zuverlässigkeit um einen ersten Wert herabzusetzen, oder die Gesamtlatenz der Gesamt-Kommunikationsverbindung zwischen der ersten Nutzereinheit (100) und der zweiten Nutzereinheit (200) zu bestimmen und dazu um einen zweiten Wert zu erhöhen, und
wobei, wenn die Service Area, in der sich die zweite Nutzereinheit (200) befindet, identisch mit der Service Area ist, in der sich die erste Nutzereinheit (100) befindet, die Prozessoreinheit (130) ausgebildet ist, die Gesamtzuverlässigkeit der Gesamt-Kommunikationsverbindung zu bestimmen und dazu die Gesamt-Zuverlässigkeit nicht um den ersten Wert herabzusetzen, oder die Gesamtlatenz der Gesamt-Kommunikationsverbindung zwischen der ersten Nutzereinheit (100) und der zweiten Nutzereinheit (200) zu bestimmen und dazu nicht um den zweiten Wert zu erhöhen.

2. Erste Nutzereinheit (100) gemäß Anspruch 1,
wobei die erste Kommunikationsverbindung eine Kommunikationsverbindung zwischen der ersten Nutzereinheit (100) und der Kommunikationseinheit ist,
wobei die zweite Kommunikationsverbindung eine Kommunikationsverbindung zwischen der Kommunikationseinheit und der zweiten Nutzereinheit (200)'ist,
wobei die Kommunikationseinheit eine Basisstation ist, und
wobei das Empfangsmodul (120), das eingerichtet ist, die Nachricht mit der zweiten Zuverlässigkeits-Information oder mit der zweiten Latenz-Information von der Basisstation zu empfangen.

3. Erste Nutzereinheit (100) gemäß Anspruch 1 oder 2,
wobei, wenn die Service Area, in der sich die zweite Nutzereinheit (200) befindet, unterschiedlich zu der Service Area ist, in der sich die erste Nutzereinheit (100) befindet, die Prozessoreinheit (130) ausgebildet ist, die Gesamtzuverlässigkeit derGesamt-Kommunikationsverbindung zwischen der ersten Nutzereinheit (100) und der zweiten Nutzereinheit (200) in Abhängigkeit von der ersten Zuverlässigkeits-Information und in Abhängigkeit von der zweiten Zuverlässigkeits-Information zu bestimmen, oder die Gesamtlatenz der Gesamt-Kommunikationsverbindung zwischen der ersten Nutzereinheit (100) und der zweiten Nutzereinheit (200) in Abhängigkeit von der ersten Latenz-Information und in Abhängigkeit von der zweiten Latenz-Information zu bestimmen, und
wobei, wenn die Service Area, in der sich die zweite Nutzereinheit (200) befindet, identisch mit der Service Area ist, in der sich die erste Nutzereinheit (100) befindet, die Prozessoreinheit (130) ausgebildet ist, die Gesamtzuverlässigkeit der Gesamt-Kommunikationsverbindung zwischen der ersten Nutzereinheit (100) und der zweiten Nutzereinheit (200) in Abhängigkeit von der ersten Zuverlässigkeits-Information aber nicht in Abhängigkeit von der zweiten Zuverlässigkeits-Information zu bestimmen, oder die Gesamtlatenz der Gesamt-Kommunikationsverbindung zwischen der ersten Nutzereinheit (100) und der zweiten Nutzereinheit (200) in Abhängigkeit von der ersten Latenz-Information aber nicht in Abhängigkeit von der zweiten Latenz-Information zu bestimmen.

4. Erste Nutzereinheit (100) gemäß einem der vorherigen Ansprüche,
wobei die Prozessoreinheit (130) ausgebildet ist, sowohl die Gesamtzuverlässigkeit der Gesamt-Kommunikationsverbindung zwischen der ersten Nutzereinheit (100) und der zweiten Nutzereinheit (200) in Abhängigkeit von der ersten Zuverlässigkeits-Information und in Abhängigkeit von der zweiten Zuverlässigkeits-Information zu bestimmen, als auch die Gesamtlatenz der Gesamt-Kommunikationsverbindung zwischen der ersten Nutzereinheit (100) und der zweiten Nutzereinheit (200) in Abhängigkeit von der ersten Latenz-Information und in Abhängigkeit von der zweiten Latenz-Information zu bestimmen.

5. Eine erste Nutzereinheit (100) gemäß Anspruch 1,
wobei die Prozessoreinheit (130) ausgebildet ist, abhängig von zumindest der Gesamtzuverlässigkeit der Gesamt-Kommunikationsverbindung oder abhängig von zumindest der Gesamt-Latenz zu entscheiden, ob ein Datenpaket zu der zweiten Nutzereinheit (200) gesendet wird, oder nicht.

6. Erste Nutzereinheit (100) gemäß Anspruch 5,
wobei die Prozessoreinheit (130) ausgebildet ist, sowohl abhängig von der Gesamtzuverlässigkeit der Gesamt-Kommunikationsverbindung als auch abhängig von der Gesamt-Latenz zu entscheiden, ob ein Datenpaket zu der zweiten Nutzereinheit (200) gesendet wird, oder nicht.

7. Erste Nutzereinheit (100) gemäß einem der vorherigen Ansprüche,
wobei die Prozessoreinheit (130) ausgebildet ist, eine Gesamtzuverlässigkeit einer Gesamt-Kommunikationsverbindung zwischen der ersten Nutzereinheit (100) und der zweiten Nutzereinheit (200) in Abhängigkeit von einem Ergebnis einer Multiplikation der ersten Zuverlässigkeit der ersten Kommunikationsverbindung mit der zweiten Zuverlässigkeit der zweiten Kommunikationsverbindung zu bestimmen.

8. Erste Nutzereinheit (100) gemäß einem der vorherigen Ansprüche,
wobei die Prozessoreinheit (130) ausgebildet ist, eine Gesamtlatenz einer Gesamt-Kommunikationsverbindung zwischen der ersten Nutzereinheit (100) und der zweiten Nutzereinheit (200) in Abhängigkeit von einem Ergebnis einer Summe der ersten Latenz der ersten Kommunikationsverbindung und der zweiten Latenz der zweiten Kommunikationsverbindung zu bestimmen.

9. System, umfassend,
die erste Nutzereinheit (100) nach einem der Ansprüche 1 bis 8,
die Kommunikationseinheit, und
die zweite Nutzereinheit (200),
wobei die Kommunikationseinheit eine Speichereinheit aufweist, die eingerichtet ist, zumindest die zweite Zuverlässigkeits-Information über die zweite Zuverlässigkeit der zweiten Kommunikationsverbindung für die Service Area zu speichern, in der sich die zweite Nutzereinheit (200) befindet, oder zumindest die zweite Latenz-Information über die zweite Latenz der zweiten Kommunikationsverbindung für die Service Area zu speichern, in der sich die zweite Nutzereinheit (200) befindet,
wobei die Kommunikationseinheit des Weiteren ein Sendemodul aufweist, das eingerichtet ist, die Nachricht zu der ersten Nutzereinheit (100) zu senden, wobei die Nachricht zumindest die zweite Zuverlässigkeits-Information oder zumindest die zweite Latenz-Information umfasst.

10. Verfahren, umfassend:

Gespeichertes Vorhalten in einer ersten Nutzereinheit (100) von zumindest einer ersten Zuverlässigkeits-Information über eine erste Zuverlässigkeit einer ersten Kommunikationsverbindung für eine Service Area, in der sich die erste Nutzereinheit (100) befindet, oder gespeichertes Vorhalten zumindest einer ersten Latenz-Information über eine erste Latenz der ersten Kommunikationsverbindung für die Service Area, in der sich die erste Nutzereinheit (100) befindet,
Empfangen einer Nachricht von einer Kommunikationseinheit durch die erste Nutzereinheit (100), wobei die Nachricht zumindest eine zweite Zuverlässigkeits-Information über eine zweite Zuverlässigkeit einer zweiten Kommunikationsverbindung für eine Service Area umfasst, in der sich eine zweite Nutzereinheit (200) befindet, oder wobei die Nachricht zumindest eine zweite Latenz-Information über eine zweite Latenz der zweiten Kommunikationsverbindung für die Service Area umfasst, in der sich die zweite Nutzereinheit (200) befindet,
Bestimmen einer Gesamtzuverlässigkeit einer Gesamt-Kommunikationsverbindung zwischen der ersten Nutzereinheit (100) und der zweiten Nutzereinheit (200) in Abhängigkeit von der ersten Zuverlässigkeits-Information und in Abhängigkeit von der zweiten Zuverlässigkeits-Information durch die erste Nutzereinheit (100), oder Bestimmen einer Gesamtlatenz der Gesamt-Kommunikationsverbindung zwischen der ersten Nutzereinheit (100) und der zweiten Nutzereinheit (200) in Abhängigkeit von der ersten Latenz-Information und in Abhängigkeit von der zweiten Latenz-Information zu bestimmen durch die erste Nutzereinheit (100), wobei die Service Area, in der sich die zweite Nutzereinheit (200) befindet, identisch mit der Service Area ist, in der sich die erste Nutzereinheit (100) befindet, oder wobei die Service Area, in der sich die zweite Nutzereinheit (200) befindet, unterschiedlich zu der Service Area ist, in der sich die erste Nutzereinheit (100) befindet,
**dadurch gekennzeichnet, dass** wenn die Service Area, in der sich die zweite Nutzereinheit (200) befindet, unterschiedlich zu der Service Area ist, in der sich die erste Nutzereinheit (100) befindet, Bestimmen der Gesamtzuverlässigkeit der Gesamt-Kommunikationsverbindung und dazu Herabsetzen der Gesamt-Zuverlässigkeit um einen ersten Wert, oder Bestimmen der Gesamtlatenz der Gesamt-Kommunikationsverbindung zwischen der ersten Nutzereinheit (100) und der zweiten Nutzereinheit (200) und dazu Erhöhen um einen zweiten Wert, und
wenn die Service Area, in der sich die zweite Nutzereinheit (200) befindet, identisch mit der Service Area ist, in der sich die erste Nutzereinheit (100) befindet, Bestimmen der Gesamtzuverlässigkeit der Gesamt-Kommunikationsverbindung und dazu kein Herabsetzen der Gesamt-Zuverlässigkeit um den ersten Wert, oder Bestimmen der Gesamtlatenz der Gesamt-Kommunikationsverbindung zwischen der ersten Nutzereinheit (100) und der zweiten Nutzereinheit (200) und dazu kein Erhöhen um den zweiten Wert.

11. Verfahren, gemäß Anspruch 10, wobei das Verfahren umfasst:
Entscheiden, abhängig von zumindest der Gesamtzuverlässigkeit einer Gesamt-Kommunikationsverbindung oder abhängig von zumindest der Gesamt-Latenz, ob ein Datenpaket zu der zweiten Nutzereinheit (200) gesendet wird, oder nicht.

12. Verfahren zum Betrieb eines Systems,
wobei das Verfahren das Verfahren nach Anspruch 10 umfasst,
wobei das System die erste Nutzereinheit (100), die Kommunikationseinheit, und die zweite Nutzereinheit (200) umfasst,
wobei die Kommunikationseinheit eine Speichereinheit aufweist, die zumindest die zweite Zuverlässigkeits-Information über die zweite Zuverlässigkeit der zweiten Kommunikationsverbindung für die Service Area speichert, in der sich die zweite Nutzereinheit (200) befindet, oder zumindest die zweite Latenz-Information über die zweite Latenz der zweiten Kommunikationsverbindung für die Service Area speichert, in der sich die zweite Nutzereinheit (200) befindet,
wobei die Kommunikationseinheit des Weiteren ein Sendemodul aufweist, das die Nachricht zu der ersten Nutzereinheit (100) sendet, wobei die Nachricht zumindest die zweite Zuverlässigkeits-Information oder zumindest die zweite Latenz-Information umfasst.

13. Computerprogramm mit einem Programmcode zur Durchführung des Verfahrens nach einem der Ansprüche 10 bis 12.

**Claims**

1. First user unit (100), including
a storage unit (110) equipped to store at least a first reliability information about a first reliability of a first communication connection for a service area the first user unit (100) is located in, or to store at least a first latency information about a first latency of the first communication connection for the service area the first user unit (100) is located in,
a reception module (120) equipped to receive a message from a communication unit, the message including at least a second reliability information about a second reliability of a second communication connection for a service area a second user unit (200) is located in, or the message including at least a second latency information about a second latency of the second communication connection for the service area the second user unit (200) is located in,
a processor unit (130) configured to determine an overall reliability of an overall communication connection between the first user unit (100) and the second user unit (200) depending on the first reliability information and depending on the second reliability information, or to determine an overall latency of the overall communication connection between the first user unit (100) and the second user unit (200) depending on the first latency information and depending on the second latency information,
wherein the service area the second user unit (200) is located in is identical to the service area the first user unit (100) is located in, or wherein the service area the second user unit (200) is located in differs from the service area the first user unit (100) is located in,
**characterized in that**, if the service area the second user unit (200) is located in differs from the service area the first user unit (100) is located in, the processor unit (130) is configured to determine the overall reliability of the overall communication connection and, for this purpose, to decrease the overall reliability by a first value, or to determine the overall latency of the overall communication connection between the first user unit (100) and the second user unit (200) and, for this purpose, to increase the same by a second value, and
wherein, if the service area the second user unit (200) is located in is identical to the service area the first user unit (100) is located in, the processor unit (130) is configured to determine the overall reliability of the overall communication connection and, for this purpose, to not decrease the overall reliability by the first value, or to determine the overall latency of the overall communication connection between the first user unit (100) and the second user unit (200) and, for this purpose, to not increase the same by the second value.

2. First user unit (100) according to claim 1,
wherein the first communication connection is a communication connection between the first user unit (100) and the communication unit,
wherein the second communication connection is a communication connection between the communication unit and the second user unit (200),
wherein the communication unit is a base station, and
wherein the reception module (120) is equipped to receive the message with the second reliability information or with the second latency information from the base station.

3. First user unit (100) according to claim 1 or 2,
wherein, if the service area the second user unit (200) is located in differs from the service area the first user unit (100) is located in, the processor unit (130) is configured to determine the overall reliability of the overall communication connection between the first user unit (100) and the second user unit (200) depending on the first reliability information and depending on the second reliability information, or to determine the overall latency of the overall communication connection between the first user unit (100) and the second user unit (200) depending on the first latency information and depending on the second latency information, and
wherein, if the service area the second user unit (200) is located in is identical to the service area the first user unit (100) is located in, the processor unit (130) is configured to determine the overall reliability of the overall communication connection between the first user unit (100) and the second user unit (200) depending on the first reliability information, but not depending on the second reliability information, or to determine the overall latency of the overall communication connection between the first user unit (100) and the second user unit (200) depending on the first latency information, but not depending on the second latency information.

4. First user unit (100) according to any of the preceding claims,
   wherein the processor unit (130) is configured to determine the overall reliability of the overall communication connection between the first user unit (100) and the second user unit (200) depending on the first reliability information and depending on the second reliability information, as well as to determine the overall latency of the overall communication connection between the first user unit (100) and the second user unit (200) depending on the first latency information and depending on the second latency information.

5. First user unit (100) according to claim 1,
   wherein the processor unit (130) is configured to decide, depending on at least the overall reliability of the overall communication connection or depending on at least the overall latency, whether a data packet is transmitted to the second user unit (200) or not.

6. First user unit (100) according claim 5,
   wherein the processor unit (130) is configured to decide, depending on the overall reliability of the overall communication connection as well as depending on the overall latency, whether a data packet is to be transmitted to the second user unit (200) or not.

7. First user unit (100) according to any of the preceding claims,
   wherein the processor unit (130) is configured to determine an overall reliability of an overall communication connection between the first user unit (100) and the second user unit (200) depending on a result of a multiplication of the first reliability of the first communication connection and the second reliability of the second communication connection.

8. First user unit (100) according to any one of the preceding claims,
   wherein the processor unit (130) is configured to determine an overall latency of an overall communication connection between the first user unit (100) and the second user unit (200) depending on a result of a sum of the first latency of the first communication connection and the second latency of the second communication connection.

9. System, including
   the first user unit (100) according to any of claims 1 to 8,
   the communication unit, and
   the second user unit (200),
   wherein the communication unit comprises a storage unit equipped to store at least the second reliability information about the second reliability of the second communication connection for the service area the second user unit (200) is located in, or to store at least the second latency information about the second latency of the second communication connection for the service area the second user unit (200) is located in,
   wherein the communication unit further comprises a transmission module equipped to transmit the message to the first user unit (100), wherein the message includes at least the second reliability information or at least the second latency information.

10. Method, including:

   maintaining in a stored manner, in a first user unit (100), at least a first reliability information about a first reliability of a first communication connection for a service area the first user unit (100) is located in, or maintaining in a stored manner at least a first latency information about a first latency of the first communication connection for the service area the first user unit (100) is located in,
   receiving a message from a communication unit by the first user unit (100), the message including at least a second reliability information about a second reliability of a second communication connection for a service area a second user unit (200) is located in, or the message including at least a second latency information about a second latency of the second communication connection for the service area the second user unit (200) is located in,
   determining, by the first user unit (100), an overall reliability of an overall communication connection between the first user unit (100) and the second user unit (200) depending on the first reliability information and depending on the second reliability information, or determining, by the first user unit (100), an overall latency of the overall communication connection between the first user unit (100) and the second user unit (200) depending on the first latency information and depending on the second latency information, wherein the service area the second user unit (200) is located in is identical to the service area the first user unit (100) is located in, or wherein the service area the second user unit (200) is located in differs from the service area the first user unit (100) is located in,

**characterized by**, if the service area the second user unit (200) is located in differs from the service area the first user unit (100) is located in, determining the overall reliability of the overall communication connection and, for this purpose, decreasing the overall reliability by a first value, or determining the overall latency of the overall communication connection between the first user unit (100) and the second user unit (200) and, for this purpose, increasing the same by a second value, and

if the service area the second user unit (200) is located in is identical to the service area the first user unit (100) is located in, determining the overall reliability of the overall communication connection and, for this purpose, not decreasing the overall reliability by the first value, or determining the overall latency of the overall communication connection between the first user unit (100) and the second user unit (200) and, for this purpose, not increasing the same by the second value.

11. Method according to claim 10, the method including:
deciding, depending on at least the overall reliability of an overall communication connection or depending on at least the overall latency, whether a data packet is transmitted to the second user unit (200) or not.

12. Method for operating a system,
wherein the system includes the method according to claim 10,
wherein the system includes the first user unit (100), the communication unit, and the second user unit (200),
wherein the communication unit comprises a storage unit that stores at least the second reliability information about the second reliability of the second communication connection for the service area the second user unit (200) is located in, or that stores at least a second latency information about the second latency of the second communication connection for the service area the second user unit (200) is located in,
wherein the communication unit further comprises a transmission module that transmits the message to the first user unit (100), wherein the message includes at least the second reliability information or at least the second latency information.

13. Computer program with a program code for performing a method according to any of claims 10 to 12.

**Revendications**

1. Première unité d'utilisateur (100), comprenant
une unité de mémoire (110) qui est configurée pour mémoriser au moins une première information de fiabilité relative à une première fiabilité d'une première connexion de communications pour une zone de service dans laquelle se situe la première unité d'utilisateur (100), ou pour mémoriser au moins une première information de latence relative à une première latence de la première connexion de communications pour la zone de service dans laquelle se situe la première unité d'utilisateur (100),
un module de réception (120) qui est configuré pour recevoir un message d'une unité de communication, où le message comporte au moins une deuxième information de fiabilité relative à une deuxième fiabilité d'une deuxième connexion de communications pour une zone de service dans laquelle se situe une deuxième unité d'utilisateur (200), ou bien où le message comporte au moins une deuxième information de latence relative à une deuxième latence de la deuxième connexion de communications pour la zone de service dans laquelle se situe la deuxième unité d'utilisateur (200),
une unité de traitement (130) qui est configurée pour déterminer une fiabilité d'ensemble d'une connexion de communications d'ensemble entre la première unité d'utilisateur (100) et la deuxième unité d'utilisateur (200) en fonction de la première information de fiabilité et en fonction de la deuxième information de fiabilité, ou pour déterminer une latence d'ensemble de la connexion de communications d'ensemble entre la première unité d'utilisateur (100) et la deuxième unité d'utilisateur (200) en fonction de la première information de latence et en fonction de la deuxième information de latence,
dans laquelle la zone de service dans laquelle se situe la deuxième unité d'utilisateur (200) est identique à la zone de service dans laquelle se situe la première unité d'utilisateur (100), ou dans laquelle la zone de service dans laquelle se situe la deuxième unité d'utilisateur (200) est différente de la zone de service dans laquelle se situe la première unité d'utilisateur (100),

**caractérisée par le fait que**, lorsque la zone de service dans laquelle se situe la deuxième unité d'utilisateur (200) est différente de la zone de service dans laquelle se situe la première unité d'utilisateur (100), l'unité de traitement (130) est configurée pour déterminer la fiabilité d'ensemble de la connexion de communications d'ensemble et, à cet effet, pour diminuer la fiabilité d'ensemble d'une première valeur, ou pour déterminer la latence d'ensemble de la connexion de communications d'ensemble entre la première unité d'utilisateur (100) et la deuxième unité d'utilisateur (200) et, à cet effet, pour l'augmenter d'une deuxième valeur, et

dans laquelle, lorsque la zone de service dans laquelle se situe la deuxième unité d'utilisateur (200) est identique à la zone de service dans laquelle se situe la première unité d'utilisateur (100), l'unité de processeur (130) est configurée pour déterminer la fiabilité d'ensemble de la connexion de communications d'ensemble et, à cet effet, pour diminuer la fiabilité d'ensemble de la première valeur, ou pour déterminer la latence d'ensemble de la connexion de communications d'ensemble entre la première unité d'utilisateur (100) et la deuxième unité d'utilisateur (200) et, à cet effet, pour ne pas l'augmenter de la deuxième valeur.

2. Première unité d'utilisateur (100) selon la revendication 1,
dans laquelle la première connexion de communications est une connexion de communications entre la première unité d'utilisateur (100) et l'unité de communication,
dans laquelle la deuxième connexion de communications est une connexion de communications entre l'unité de communication et la deuxième unité d'utilisateur (200),
dans laquelle l'unité de communication est une station de base, et
dans laquelle le module de réception (120) est configuré pour recevoir de la station de base le message avec la deuxième information de fiabilité ou avec la deuxième information de latence.

3. Première unité d'utilisateur (100) selon la revendication 1 ou 2,
dans laquelle, lorsque la zone de service dans laquelle se situe la deuxième unité d'utilisateur (200) est différente de la zone de service dans laquelle se situe la première unité d'utilisateur (100), l'unité de traitement (130) est configurée pour déterminer la fiabilité d'ensemble de la connexion de communications d'ensemble entre la première unité d'utilisateur (100) et la deuxième unité d'utilisateur (200) en fonction de la première information de fiabilité et en fonction de la deuxième information de fiabilité, ou pour déterminer la latence d'ensemble de la connexion de communications d'ensemble entre la première unité d'utilisateur (100) et le la deuxième unité d'utilisateur (200) en fonction de la première information de latence et en fonction de la deuxième information de latence, et
dans laquelle, lorsque la zone de service dans laquelle se situe la deuxième unité d'utilisateur (200) est identique à la zone de service dans laquelle se situe la première unité d'utilisateur (100), l'unité de traitement (130) est configurée pour déterminer la fiabilité d'ensemble de la connexion de communications d'ensemble entre la première unité d'utilisateur (100) et la deuxième unité d'utilisateur (200) en fonction de la première information de fiabilité, mais pas en fonction de le deuxième information de fiabilité, ou pour déterminer la latence d'ensemble de la connexion de communications d'ensemble entre la première unité d'utilisateur (100) et la deuxième unité d'utilisateur (200) en fonction de la première information de latence, mais pas en fonction de la deuxième information de latence.

4. Première unité d'utilisateur (100) selon l'une des revendications précédentes,
dans laquelle l'unité de processeur (130) est configurée tant pour déterminer la fiabilité d'ensemble de la connexion de communications d'ensemble entre la première unité d'utilisateur (100) et la deuxième unité d'utilisateur (200) en fonction de la première information de fiabilité et en fonction de la deuxième information de fiabilité, que pour déterminer la latence d'ensemble de la connexion de communications d'ensemble entre la première unité d'utilisateur (100) et la deuxième unité d'utilisateur (200) en fonction de la première information de latence et en fonction de la deuxième information de latence.

5. Première unité d'utilisateur (100) selon la revendication 1,
dans laquelle l'unité de traitement (130) est configurée pour décider, en fonction d'au moins la fiabilité d'ensemble de la connexion de communications d'ensemble ou en fonction d'au moins la latence d'ensemble, si un paquet de données est envoyé ou non à la. deuxième unité d'utilisateur (200).

6. Première unité d'utilisateur (100) selon la revendication 5,
dans laquelle l'unité de processeur (130) est configurée pour décider, tant en fonction de la fiabilité d'ensemble de la connexion de communications d'ensemble qu'en fonction de la latence d'ensemble, si un paquet de données est envoyé ou non à la deuxième unité d'utilisateur (200).

7. Première unité d'utilisateur (100) selon l'une des revendications précédentes,
dans laquelle l'unité de processeur (130) est configurée pour déterminer une fiabilité d'ensemble d'une connexion de communications d'ensemble entre la première unité d'utilisateur (100) et la deuxième unité d'utilisateur (200) en fonction d'un résultat d'une multiplication de la première fiabilité la première connexion de communications par la deuxième fiabilité de la deuxième connexion de communications.

8. Première unité d'utilisateur (100) selon l'une des revendications précédentes,
dans laquelle l'unité de processeur (130) est configurée pour déterminer une latence d'ensemble d'une connexion de communications d'ensemble entre la première unité d'utilisateur (100) et la deuxième unité d'utilisateur (200) en fonction d'un résultat d'une somme de la première latence de la première connexion de communications et de la deuxième latence de la deuxième connexion de communications.

9. Système, comportant
la première unité d'utilisateur (100) selon l'une des revendications 1 à 8,
l'unité de communication, et
la deuxième unité d'utilisateur (200),
dans lequel l'unité de communication présente une unité de mémoire qui est configurée pour mémoriser au moins la deuxième information de fiabilité relative à la deuxième fiabilité de la deuxième connexion de communications pour la zone de service dans laquelle se situe la deuxième unité d'utilisateur (200), ou pour mémoriser au moins la deuxième information de latence relative à la deuxième latence de la deuxième connexion de communications pour la zone de service dans laquelle se situe la deuxième unité d'utilisateur (200),
dans lequel l'unité de communication présente par ailleurs un module de transmission qui est configuré pour envoyer le message à la première unité d'utilisateur (100), dans lequel le message comporte au moins la deuxième information de fiabilité ou au moins la deuxième information de latence.

10. Procédé, comportant le fait de:

maintenir mémorisée dans une première unité d'utilisateur (100) au moins une première information de fiabilité relative à une première fiabilité d'une première connexion de communications pour une zone de service dans laquelle se situe la première unité d'utilisateur (100), ou maintenir mémorisée au moins une première information de latence sur une première latence de la première connexion de communications pour la zone de service dans laquelle se situe la première unité d'utilisateur (100),
recevoir, par la première unité d'utilisateur (100), un message d'une unité de communication, où le message comporte au moins une deuxième information de fiabilité relative à une deuxième fiabilité d'une deuxième connexion de communications pour une zone de service dans laquelle se situe une deuxième unité d'utilisateur (200), ou bien où le message comporte au moins une deuxième information de latence relative à une deuxième latence de la deuxième connexion de communications pour la zone de service dans laquelle se situe la deuxième unité d'utilisateur (200),
déterminer, par la première unité d'utilisateur (100), une fiabilité d'ensemble d'une connexion de communications d'ensemble entre la première unité d'utilisateur (100) et la deuxième unité d'utilisateur (200) en fonction de la première information de fiabilité et en fonction de la deuxième information de fiabilité, ou déterminer, par la première unité d'utilisateur (100), une latence d'ensemble de la connexion de communications d'ensemble entre la première unité d'utilisateur (100) et la deuxième unité d'utilisateur (200) en fonction de la première information de latence et en fonction de la deuxième information de latence, où la zone de service dans laquelle se situe la deuxième unité d'utilisateur (200) est identique à la zone de service dans laquelle se situe la première unité d'utilisateur (100), ou bien où la zone de service dans laquelle se situe la deuxième unité d'utilisateur (200) est différente de la zone de service dans laquelle se situe la première unité d'utilisateur (100),
**caractérisé par** le fait de, lorsque la zone de service dans laquelle se situe la deuxième unité d'utilisateur (200) est différente de la zone de service dans laquelle se situe la première unité d'utilisateur (100), déterminer la fiabilité d'ensemble de la connexion de communications d'ensemble et, à cet effet, diminuer la fiabilité d'ensemble d'une première valeur, ou de déterminer la latence d'ensemble de la connexion de communications d'ensemble entre la première unité d'utilisateur (100) et la deuxième unité d'utilisateur (200) et, à cet effet, l'augmenter d'une deuxième valeur, et
lorsque la zone de service dans laquelle se situe la deuxième unité d'utilisateur (200) est identique à la zone de service dans laquelle se situe la première unité d'utilisateur (100), déterminer la fiabilité d'ensemble de la connexion de communications d'ensemble et, à cet effet, ne pas diminuer la fiabilité d'ensemble de la première valeur, ou déterminer la latence d'ensemble de la connexion de communications d'ensemble entre la première unité d'utilisateur (100) et la deuxième unité d'utilisateur (200) et, à cet effet, ne pas l'augmenter de la deuxième valeur.

**11.** Procédé selon la revendication 10, dans lequel le procédé comporte le fait de:
décider, en fonction d'au moins la fiabilité d'ensemble d'une connexion de communications d'ensemble ou en fonction d'au moins la latence d'ensemble, si un paquet de données est envoyé ou non à la deuxième unité d'utilisateur (200).

**12.** Procédé pour faire fonctionner un système,
dans lequel le procédé comporte le procédé selon la revendication 10,
dans lequel le système comporte la première unité d'utilisateur (100), l'unité de communication et la deuxième unité d'utilisateur (200),
dans lequel l'unité de communication présente une unité de mémoire qui mémorise au moins la deuxième information de fiabilité relative à la deuxième fiabilité de la deuxième connexion de communications pour la zone de service dans laquelle se situe la deuxième unité d'utilisateur (200), ou mémorise au moins la deuxième information de latence relative à la deuxième latence de la deuxième connexion de communications pour la zone de service dans laquelle se situe la deuxième unité d'utilisateur (200),
dans lequel l'unité de communication présente par ailleurs un module de transmission qui envoie le message à la première unité d'utilisateur (100), où le message comporte au moins la deuxième information de fiabilité ou au moins la deuxième information de latence.

**13.** Programme d'ordinateur avec un code de programme pour mettre en oeuvre le procédé selon l'une des revendications 10 à 12.

Fig. 1

EP 3 567 807 B1

**zweite Nutzereinheit** — 200

**erste Nutzereinheit** — 100

Gesamt-zuverlässigkeit/ Gesamt-latenz

zweite Zuverlässigkeits-information/ zweite Latenz-information

zweite Kommunikations-verbindung

**Kommunikationseinheit (z.B. Basisstation)** — 150

Speichereinheit

Sendemodul

erste Kommunikationsverbindung

Fig. 2

1) MEC

2) Verteilung/
   Weitergabe/Routing
   Service (GN Router)

3) Verteilservice für
   Service-Area(s)

Service-Area(s)

Anwendungs-
nachrichten

Anwendungs-
nachrichten

UE Sender

UE Empfänger

Service-Area

Fig. 3

EP 3 567 807 B1

Fig. 4

25

Internet / Back-End

1) Verteilung/
   Weitergabe/Routing
   Service (GN Router)
2) Verteilservice für
   Service-Area(s)

Service-Area(s)

Anwendungs-nachrichten

1) MEC
2) Verteilung/
   Weitergabe/Routing
   Service (GN Router)
3) Verteilservice für Service
   für Service-Area(s)

Service-Area(s)

Anwendungs-nachrichten

Service-Area(s)

Anwendungs-nachrichten

UE Sender

Anwendungs-nachrichten

UE Empfänger

Service-Area

Fig. 5A

EP 3 567 807 B1

Internet / Back-End

1) Verteilung/
   Weitergabe/Routing
   Service (GN Router)
2) Verteilservice für
   Service-Area(s)

Service-
Area(s)

Anwendungs-
nachrichten

Anwendungs-
nachrichten

Service-
Area(s)

Anwendungs-
nachrichten

UE Sender

UE Empfänger

Service-Area

Fig. 5B

## 1 GN/MEC; 1 Service Area

| Sender | GN/MEC | Empfänger |
|---|---|---|

Verteilung der Service Area

Verteilung der Service Area

↻ Sender matcht Empfänger-Positionen auf Service-Area (ggf. Sub-Element)

↻ Sender schätzt $\hat{P}_{success}$ d.h. mit welcher Wahrscheinlichkeit kommt Paket an mit Delay-Bound

↻ Sender entscheidet über Sende-Möglichkeit
- Sender an Empfänger (über GN)
- sende nicht
- sende auf anderem Weg

Datenpaket

Datenpaket

## Fig. 6

homogene Service-Area

✖
Empfänger

✖
Sender

DUL, DDL
PUL, PDL
oder
$D_{E2E}$, $P_{E2E}$

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003005145 A1
- US 2010135232 A1
- US 2011182248 A1

**In der Beschreibung aufgeführte Nicht-Patentliteratur**

- Geographical addressing and forwarding for point-to-point and point-to-multipoint communications; Sub-part 1: Media-Independent Functionality. *Intelligent Transport Systems (ITS); Vehicular Communications; GeoNetworking,* 01. August 2017
- **ETSI.** Intelligent Transport Systems (ITS) Vehicular communications, GeoNetworking Part 4: Geographical addressing and forwarding for point-to-point and point-to-multipoint communications; Sub-part 1: Media-Independent Functionality. *ETSI EN 302 636-4-1 V1.2.1,* 2014
- A key technology towards 5G. ETSI White Paper No. 11, Mobile Edge Computing. September 2015
- Multi-access Edge Computing. *ETSI; Zugriff am,* 25. Oktober 2017, http://www.etsi.org/technologies-clusters/technologies/multi-access-edge-computing